(19) Europäisches Patentamt
European Patent Office
Office européen des brevets

(11) EP 4 815 591 A1

# (12) EUROPEAN PATENT APPLICATION
published in accordance with Art. 153(4) EPC

(43) Date of publication:
**30.09.2026 Bulletin 2026/40**

(21) Application number: **24918308.8**

(22) Date of filing: **18.12.2024**

(51) International Patent Classification (IPC):
***H04W 72/044*** *(2023.01)*

(52) Cooperative Patent Classification (CPC):
**H04L 1/00; H04W 72/044; H04W 72/232**

(86) International application number:
**PCT/CN2024/140422**

(87) International publication number:
**WO 2025/152700 (24.07.2025 Gazette 2025/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.01.2024 CN 202410067593**

(71) Applicant: **Huawei Technologies Co., Ltd.**
**Shenzhen, Guangdong 518129 (CN)**

(72) Inventor: **FAN, Bo**
**Shenzhen, Guangdong 518129 (CN)**

(74) Representative: **Thun, Clemens**
**Mitscherlich PartmbB**
**Karlstraße 7**
**80333 München (DE)**

## (54) COMMUNICATION METHOD AND DEVICE

(57) A communication method and apparatus are provided. The communication method includes: A first apparatus may receive a configuration message, where the configuration message may include information about a PDCCH resource, and the PDCCH resource may include a CORESET, a search space, a monitoring occasion, or a PDCCH candidate. Then, the first apparatus may determine, depending on whether a first signal associated with the PDCCH resource is received, whether to receive a PDCCH corresponding to the PDCCH resource. According to the method, the first apparatus can be prevented from performing a blind detection on a PDCCH resource without a PDCCH, so that complexity of receiving the PDCCH by the first apparatus is reduced, and energy consumption of the first apparatus is reduced.

First apparatus
Second apparatus
S401: Configuration message
S403: Determine, depending on whether the first signal associated with the PDCCH resource is received, whether to receive the PDCCH corresponding to the PDCCH resource
S402: Determine, depending on whether a PDCCH corresponding to a PDCCH resource is sent, whether to send a first signal associated with the PDCCH resource
S404: If a first condition is satisfied, subtract a quantity of blind detections corresponding to the PDCCH resource from a quantity of remaining blind detections, and/or subtract a quantity of non-overlapping CCEs corresponding to the PDCCH resource from a quantity of remaining non-overlapping CCEs
S405: If a second condition is satisfied, keep the quantity of remaining blind detections unchanged, and/or keep the quantity of remaining non-overlapping CCEs unchanged

FIG. 4



Processed by Luminess, 75001 PARIS (FR)

## Description

### CROSS-REFERENCE TO RELATED APPLICATIONS

This application claims priority to Chinese Patent Application No. 202410067593.7, filed with the China National Intellectual Property Administration on January 16, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a mobile communication system, for example, a 5th generation (5th generation, 5G) mobile communication system, an access network device may send a physical downlink control channel (physical downlink control channel, PDCCH) to a terminal. The PDCCH may be used for transmission of downlink control information (downlink control information, DCI), and the DCI may indicate at least one of the following: uplink scheduling information, downlink scheduling information, and other physical layer control information.

Currently, the terminal receives the PDCCH based on static information, for example, a quantity of blind detections and a quantity of non-overlapping control channel elements (control channel elements, CCEs) that correspond to a search space. The method is complex.

### SUMMARY

This application provides a communication method and apparatus, to reduce complexity of receiving a PDCCH.

**According to a first aspect,** an embodiment of this application provides a communication method. The method may be applied to a first apparatus. The first apparatus may be a terminal or a module (for example, a circuit, a chip (for example, a modem (Modem) chip, also referred to as a baseband (baseband) chip, or a system on a chip (system on a chip, SoC) chip or a system in package (system in package, SIP) chip including a modem core), a chip system, or a processor) in the terminal; or may be a logical node, a logical module, or software that can implement all or some functions of the terminal. The method may include: A first apparatus may receive a configuration message, where the configuration message may include information about a PDCCH resource, and the PDCCH resource may include a control resource set (control resource set, CORESET), a search space, a monitoring occasion, or a PDCCH candidate. Then, the first apparatus may determine, depending on whether a first signal associated with the PDCCH resource is received, whether to receive a PDCCH corresponding to the PDCCH resource.

According to the method, the first apparatus can be prevented from performing a blind detection on a PDCCH resource without a PDCCH, so that complexity of receiving the PDCCH by the first apparatus is reduced, and energy consumption of the first apparatus is reduced.

In a possible design, if a first condition is satisfied, the first apparatus may receive the PDCCH corresponding to the PDCCH resource. The first condition may include one or a combination of more of the following: The first apparatus receives the first signal associated with the PDCCH resource; a quantity of blind detections corresponding to the PDCCH resource is less than or equal to a quantity of remaining blind detections; or a quantity of non-overlapping control channel elements CCEs corresponding to the PDCCH resource is less than or equal to a quantity of remaining non-overlapping CCEs. When the first condition includes that the first apparatus receives the first signal associated with the PDCCH resource, the first apparatus may determine to receive the PDCCH corresponding to the PDCCH resource, only when the first apparatus receives the first signal associated with the PDCCH resource. In this way, the first apparatus can be prevented from performing a blind detection on a PDCCH resource without a PDCCH, so that complexity of receiving the PDCCH by the first apparatus is reduced, and energy consumption of the first apparatus is reduced.

In a possible design, the method further includes: If the first condition is satisfied, the first apparatus may subtract the quantity of blind detections corresponding to the PDCCH resource from the quantity of remaining blind detections to obtain an updated quantity of remaining blind detections, and/or the first apparatus may subtract the quantity of non-overlapping CCEs corresponding to the PDCCH resource from the quantity of remaining non-overlapping CCEs to obtain an updated quantity of remaining non-overlapping CCEs. According to this design, the first apparatus may update the quantity of remaining blind detections and/or the quantity of remaining non-overlapping CCEs in a timely manner.

In a possible design, if a second condition is satisfied, the first apparatus may skip receiving the PDCCH corresponding to the PDCCH resource. The second condition may include one or a combination of more of the following:

The first apparatus does not receive the first signal associated with the PDCCH resource; the first apparatus receives the first signal associated with the PDCCH resource, and a quantity of blind detections corresponding to the PDCCH resource is greater than a quantity of remaining blind detections; and the first apparatus receives the first signal associated with the PDCCH resource, and a quantity of non-overlapping CCEs corresponding to the PDCCH resource is greater than a quantity of remaining non-overlapping CCEs. When the second condition includes that the first apparatus does not receive the first signal associated with the PDCCH resource, if the first apparatus does not receive the first signal associated with the PDCCH resource, the first apparatus may skip receiving the PDCCH corresponding to the PDCCH resource. In this way, the first apparatus can be prevented from performing a blind detection on a PDCCH resource without a PDCCH, so that complexity of receiving the PDCCH by the first apparatus is reduced, and energy consumption of the first apparatus is reduced. When the second condition includes that the first apparatus receives the first signal associated with the PDCCH resource, and the quantity of blind detections corresponding to the PDCCH resource is greater than the quantity of remaining blind detections, it can be ensured that a quantity of blind detections performed by the first apparatus in one slot in one cell or one bandwidth part (bandwidth part, BWP) does not exceed a maximum quantity of blind detections specified in a protocol. When the second condition includes that the first apparatus receives the first signal associated with the PDCCH resource, and the quantity of non-overlapping CCEs corresponding to the PDCCH resource is greater than the quantity of remaining non-overlapping CCEs, it can be ensured that a quantity of non-overlapping CCEs involved in a blind detection performed by the first apparatus does not exceed a maximum quantity of non-overlapping CCEs specified in a protocol.

In a possible design, if the second condition is satisfied, the first apparatus may keep the quantity of remaining blind detections unchanged, and/or the first apparatus may keep the quantity of remaining non-overlapping CCEs unchanged. When the second condition includes that the first apparatus does not receive the first signal associated with the PDCCH resource, if the second condition is satisfied, the first apparatus may skip allocating a quantity of blind detections and/or a quantity of non-overlapping CCEs to the PDCCH resource. In this way, the first apparatus can be prevented from performing a blind detection on a PDCCH resource without a PDCCH, so that complexity of receiving the PDCCH by the first apparatus is reduced, and energy consumption of the first apparatus is reduced. When the second condition includes that the first apparatus receives the first signal associated with the PDCCH resource, and the quantity of blind detections corresponding to the PDCCH resource is greater than the quantity of remaining blind detections, it can be ensured that a quantity of blind detections performed by the first apparatus in one slot in one cell or one BWP does not exceed a maximum quantity of blind detections specified in a protocol. When the second condition includes that the first apparatus receives the first signal associated with the PDCCH resource, and the quantity of non-overlapping CCEs corresponding to the PDCCH resource is greater than the quantity of remaining non-overlapping CCEs, it can be ensured that a quantity of non-overlapping CCEs involved in a blind detection performed by the first apparatus does not exceed a maximum quantity of non-overlapping CCEs specified in a protocol.

In a possible design, the configuration information may include information about a plurality of PDCCH resources, and the plurality of PDCCH resources include a plurality of control resource sets, a plurality of search spaces, a plurality of monitoring occasions, or a plurality of PDCCH candidates. The foregoing PDCCH resource may be any PDCCH resource in the plurality of PDCCHs. The first apparatus may determine, based on an order of the plurality of PDCCH resources and depending on whether a first signal associated with each of the plurality of PDCCH resources is received, whether to receive a PDCCH corresponding to each PDCCH resource.

Optionally, each of the plurality of PDCCH resources is associated with one first signal, and the first signal is used to determine whether a PDCCH corresponding to the PDCCH resource associated with the first signal is sent.

Optionally, for a 1st PDCCH resource in the plurality of PDCCH resources, the quantity of remaining blind detections may be a maximum quantity of blind detections specified in a protocol, and/or the quantity of remaining non-overlapping CCEs may be a maximum quantity of non-overlapping CCEs specified in the protocol.

This design is applicable to a scenario in which there are a plurality of PDCCH resources. In this way, the first apparatus can be prevented from performing a blind detection on a PDCCH resource without a PDCCH, so that complexity of receiving the PDCCH by the first apparatus is reduced, and energy consumption of the first apparatus is reduced.

In a possible design, the plurality of PDCCH resources may be a plurality of control resource sets, the order of the plurality of PDCCH resources may be an order of the plurality of control resource sets, and the order of the plurality of control resource sets may be determined based on at least one of the following: an order of indexes of the plurality of control resource sets, an order of reference time points of search spaces corresponding to the plurality of control resource sets, an order of reference time points of first signals associated with the plurality of control resource sets, or a preset order. According to this design, the first apparatus can quickly and accurately determine the order of the plurality of control resource sets.

In a possible design, the order of the plurality of control resource sets satisfies at least one of the following:

the plurality of control resource sets are sorted in ascending order of the indexes of the control resource sets;
the plurality of control resource sets are sorted in descending order of the indexes of the control resource sets;

the plurality of control resource sets are sorted in an earliest-to-latest order of the reference time points of the search spaces corresponding to the control resource sets;
the plurality of control resource sets are sorted in an earliest-to-latest order of the reference time points of the first signals associated with the control resource sets; or
M control resource sets in the plurality of control resource sets are ranked first, M is a positive integer, and the M control resource sets are preset.

This design provides a plurality of possible manners of the order of the plurality of control resource sets, and is flexible and easy to implement.
In a possible design, when the plurality of control resource sets are sorted in the earliest-to-latest order of the reference time points of the search spaces corresponding to the control resource sets, if reference time points of search spaces corresponding to N control resource sets in the plurality of control resource sets are the same, and N is an integer greater than or equal to 2, the N control resource sets may be sorted in ascending order of indexes of the control resource sets; or the N control resource sets may be sorted in descending order of indexes of the control resource sets. According to this design, the first apparatus can quickly and accurately determine the order of the N control resource sets.
In a possible design, when the plurality of control resource sets are sorted in the earliest-to-latest order of the reference time points of the first signals associated with the control resource sets, if reference time points of first signals associated with P control resource sets in the plurality of control resource sets are the same, and P is an integer greater than or equal to 2, the P control resource sets may be sorted in ascending order of indexes of the control resource sets; or the P control resource sets may be sorted in descending order of indexes of the control resource sets. According to this design, the first apparatus can quickly and accurately determine the order of the P control resource sets.
In a possible design, the plurality of PDCCH resources may be the plurality of search spaces, the order of the plurality of PDCCH resources may be an order of the plurality of search spaces, and the order of the plurality of search spaces may be determined based on at least one of the following: an order of indexes of the plurality of search spaces, an order of reference time points of the plurality of search spaces, an order of reference time points of first signals associated with the plurality of search spaces, an order of indexes of control resource sets corresponding to the plurality of search spaces, or a preset order. According to this design, the first apparatus can quickly and accurately determine the order of the plurality of search spaces.
In a possible design, the order of the plurality of search spaces may satisfy at least one of the following:

the plurality of search spaces are sorted in ascending order of the indexes of the search spaces;
the plurality of search spaces are sorted in descending order of the indexes of the search spaces;
the plurality of search spaces are sorted in an earliest-to-latest order of the reference time points of the search spaces;
the plurality of search spaces are sorted in an earliest-to-latest order of the reference time points of the first signals associated with the search spaces; or
Q search spaces in the plurality of search spaces are ranked first, Q is a positive integer, and the Q search spaces are preset.

This design provides a plurality of possible manners of the order of the plurality of search spaces, and is flexible and easy to implement.
In a possible design, when the plurality of search spaces are sorted in the earliest-to-latest order of the reference time points of the search spaces, if reference time points of R search spaces in the plurality of search spaces are the same, and R is an integer greater than or equal to 2, the R search spaces may be sorted in ascending order of indexes of the search spaces; the R search spaces may be sorted in descending order of indexes of the search spaces; the R search spaces may be sorted in ascending order of indexes of control resource sets corresponding to the search spaces; or the R search spaces may be sorted in descending order of indexes of control resource sets corresponding to the search spaces. According to this design, the first apparatus can quickly and accurately determine the order of the R search spaces.
In a possible design, when the plurality of search spaces are sorted in the earliest-to-latest order of the reference time points of the first signals associated with the search spaces, if reference time points of first signals associated with S search spaces in the plurality of search spaces are the same, and S is an integer greater than or equal to 2, the S search spaces may be sorted in ascending order of indexes of the search spaces; the S search spaces may be sorted in descending order of indexes of the search spaces; the S search spaces may be sorted in ascending order of indexes of control resource sets corresponding to the search spaces; or the S search spaces may be sorted in descending order of indexes of control resource sets corresponding to the search spaces. According to this design, the first apparatus can quickly and accurately determine the order of the S search spaces.
In a possible design, the plurality of PDCCH resources may be the plurality of monitoring occasions, the order of the plurality of PDCCH resources may be an order of the plurality of monitoring occasions, and the order of the plurality of monitoring occasions may be determined based on at least one of the following: an order of reference time points of the

plurality of monitoring occasions, an order of reference time points of first signals associated with the plurality of monitoring occasions, an order of indexes of control resource sets corresponding to the plurality of monitoring occasions, an order of indexes of search sets corresponding to the plurality of monitoring occasions, or a preset order. According to this design, the first apparatus can quickly and accurately determine the order of the plurality of monitoring occasions.

In a possible design, the order of the plurality of monitoring occasions may satisfy at least one of the following:

the plurality of monitoring occasions are sorted in an earliest-to-latest order of the reference time points of the monitoring occasions.

the plurality of monitoring occasions are sorted in an earliest-to-latest order of the reference time points of the first signals associated with the monitoring occasions;

the plurality of monitoring occasions are sorted in ascending order of the indexes of the search spaces corresponding to the monitoring occasions.

the plurality of monitoring occasions are sorted in descending order of the indexes of the search spaces corresponding to the monitoring occasions; or

T monitoring occasions in the plurality of monitoring occasions are ranked first, T is a positive integer, and the T monitoring occasions are preset.

This design provides a plurality of possible manners of the order of the plurality of monitoring occasions, and is flexible and easy to implement.

In a possible design, when the plurality of monitoring occasions are sorted in the earliest-to-latest order of the reference time points of the monitoring occasions, if reference time points of U monitoring occasions in the plurality of monitoring occasions are the same, and U is an integer greater than or equal to 2, the U monitoring occasions may be sorted in ascending order of indexes of search spaces corresponding to the monitoring occasions; the U monitoring occasions may be sorted in descending order of indexes of search spaces corresponding to the monitoring occasions; the U monitoring occasions may be sorted in ascending order of indexes of control resource sets corresponding to the monitoring occasions; or the U monitoring occasions may be sorted in descending order of indexes of control resource sets corresponding to the monitoring occasions. According to this design, the first apparatus can quickly and accurately determine the order of the U monitoring occasions.

In a possible design, when the plurality of monitoring occasions are sorted in the earliest-to-latest order of the reference time points of the first signals associated with the monitoring occasions, if reference time points of first signals associated with V monitoring occasions in the plurality of monitoring occasions are the same, and V is an integer greater than or equal to 2, the V monitoring occasions may be sorted in ascending order of indexes of search spaces corresponding to the monitoring occasions; the V monitoring occasions may be sorted in descending order of indexes of search spaces corresponding to the monitoring occasions; the V monitoring occasions may be sorted in ascending order of indexes of control resource sets corresponding to the monitoring occasions; or the V monitoring occasions may be sorted in descending order of indexes of control resource sets corresponding to the monitoring occasions. According to this design, the first apparatus can quickly and accurately determine the order of the V monitoring occasions.

In a possible design, when the plurality of monitoring occasions are sorted in ascending order of the indexes of the search spaces corresponding to the monitoring occasions, if W monitoring occasions in the plurality of monitoring occasions correspond to a same search space, and W is an integer greater than or equal to 2, the W monitoring occasions may be sorted in an earliest-to-latest order of reference time points of the monitoring occasions; or the W monitoring occasions may be sorted in an earliest-to-latest order of reference time points of the first signals associated with the monitoring occasions. According to this design, the first apparatus can quickly and accurately determine the order of the W monitoring occasions.

In a possible design, the plurality of PDCCH resources may be the plurality of PDCCH candidates, the order of the plurality of PDCCH resources may be an order of the plurality of PDCCH candidates, and the order of the plurality of PDCCH candidates may be determined based on at least one of the following: an order of monitoring occasions corresponding to the plurality of PDCCH candidates, an order of aggregation levels of the plurality of PDCCH candidates, an order of reference time points of first signals associated with the plurality of PDCCH candidates, or an order of indexes of the plurality of PDCCH candidates. According to this design, the first apparatus can quickly and accurately determine the order of the plurality of PDCCH candidates.

In a possible design, the order of the plurality of PDCCH candidates may satisfy at least one of the following:

the plurality of PDCCH candidates are sorted in a first-to-last order of the monitoring occasions corresponding to the PDCCH candidates; or

the plurality of PDCCH candidates are sorted in an earliest-to-latest order of the reference time points of the first signals associated with the PDCCH candidates.

This design provides a plurality of possible manners of the order of the plurality of PDCCH candidates, and is flexible and easy to implement.

In a possible design, when the plurality of PDCCH candidates are sorted in the first-to-last order of the monitoring occasions corresponding to the PDCCH candidates, if X PDCCH candidates in the plurality of PDCCH candidates correspond to a same monitoring occasion, and X is an integer greater than or equal to 2, the X PDCCH candidates may be sorted in descending order of aggregation levels of the PDCCH candidates; or the X PDCCH candidates may be sorted in ascending order of aggregation levels of the PDCCH candidates. According to this design, the first apparatus can quickly and accurately determine the order of the X PDCCH candidates.

In a possible design, if aggregation levels of Y PDCCH candidates in the X PDCCH candidates are the same, and Y is an integer greater than or equal to 2, the Y PDCCH candidates may be sorted in ascending order of indexes of the PDCCH candidates; or the Y PDCCH candidates may be sorted in descending order of indexes of the PDCCH candidates. According to this design, the first apparatus can quickly and accurately determine the order of the Y PDCCH candidates.

In a possible design, when the plurality of PDCCH candidates are sorted in the earliest-to-latest order of the reference time points of the first signals associated with the PDCCH candidates, if reference time points of first signals associated with Z PDCCH candidates in the plurality of PDCCH candidates are the same, and Z is an integer greater than or equal to 2, the Z PDCCH candidates may be sorted in a first-to-last order of monitoring occasions corresponding to the PDCCH candidates. According to this design, the first apparatus can quickly and accurately determine the order of the Z PDCCH candidates.

**According to a second aspect,** an embodiment of this application provides a communication method. The method may be applied to a second apparatus. The second apparatus may be an access network device or a module (for example, a circuit, a chip (for example, a modem chip, or an SoC chip or a SIP chip including a modem core), a chip system, or a processor) in the access network device; or may be a logical node, a logical module, or software that can implement all or some functions of the access network device. The method may include: A second apparatus sends a configuration message, where the configuration message may include information about a PDCCH resource, and the PDCCH resource may include a control resource set, a search space, a monitoring occasion, or a PDCCH candidate. The second apparatus may determine, depending on whether a PDCCH corresponding to the PDCCH resource is sent, whether to send a first signal associated with the PDCCH resource.

According to the method, the second apparatus may determine, depending on whether the PDCCH corresponding to the PDCCH resource is sent, whether to send the first signal associated with the PDCCH resource. Therefore, the first apparatus may determine, depending on whether the first signal associated with the PDCCH resource is received, whether to receive the PDCCH corresponding to the PDCCH resource. In this way, the first apparatus can be prevented from performing a blind detection on a PDCCH resource without a PDCCH, so that complexity of receiving the PDCCH by the first apparatus is reduced, and energy consumption of the first apparatus is reduced.

In a possible design, if the second apparatus sends the PDCCH corresponding to the PDCCH resource, the second apparatus may determine to send the first signal associated with the PDCCH resource; and/or if the second apparatus does not send the PDCCH corresponding to the PDCCH resource, the second apparatus may determine not to send the first signal associated with the PDCCH resource. According to this design, the second apparatus can quickly and accurately determine whether to send the first signal associated with the PDCCH resource.

In a possible design, the configuration information may include information about a plurality of PDCCH resources, and the plurality of PDCCH resources include a plurality of control resource sets, a plurality of search spaces, a plurality of monitoring occasions, or a plurality of PDCCH candidates. The foregoing PDCCH resource may be any PDCCH resource in the plurality of PDCCHs. For each of the plurality of PDCCH resources, the second apparatus may perform the method in the second aspect.

Optionally, each of the plurality of PDCCH resources is associated with one first signal, and the first signal is used to determine whether a PDCCH corresponding to the PDCCH resource associated with the first signal is sent.

This design is applicable to a scenario in which there are a plurality of PDCCH resources, so that the first apparatus can determine, based on whether the first signal associated with each PDCCH resource is received, whether to receive the PDCCH corresponding to each PDCCH resource. In this way, the first apparatus can be prevented from performing a blind detection on a PDCCH resource without a PDCCH, so that complexity of receiving the PDCCH by the first apparatus is reduced, and energy consumption of the first apparatus is reduced.

**According to a third aspect,** this application provides a communication apparatus. The communication apparatus may be a terminal or a module (for example, a circuit, a chip (for example, a modem chip, or an SoC chip or a SIP chip including a modem core), a chip system, or a processor) in the terminal; or may be a logical node, a logical module, or software that can implement all or some functions of the terminal. The communication apparatus has a function of implementing the first aspect. For example, the communication apparatus includes a corresponding module, unit, or means for performing the operations in the first aspect. The module, the unit, or the means may be implemented by using software, may be implemented by using hardware, or may be implemented by hardware executing corresponding software.

In a possible design, the communication apparatus includes an interface unit and a processing unit. The interface unit may be configured to: receive and send signals, to implement communication between the communication apparatus and another apparatus. The processing unit may be configured to perform some internal operations of the communication apparatus. Functions performed by the processing unit and the interface unit may correspond to the operations in the first aspect.

In a possible design, the communication apparatus includes a processor, and the processor may be configured to be coupled to a memory. The memory may store a computer program or instructions necessary for implementing functions in the first aspect. The processor may execute the computer program or the instructions stored in the memory. When the computer program or the instructions are executed, the communication apparatus is caused to implement the method in any possible design of the first aspect.

In a possible design, the communication apparatus includes a processor and a memory. The memory may store a computer program or instructions necessary for implementing functions in the first aspect. The processor may execute the computer program or the instructions stored in the memory. When the computer program or the instructions are executed, the communication apparatus is caused to implement the method in any possible design of the first aspect.

In a possible design, the communication apparatus includes a processor and an interface circuit. The processor is configured to communicate with another apparatus through the interface circuit, and perform the method in any possible design of the first aspect.

**According to a fourth aspect,** this application provides a communication apparatus. The communication apparatus may be an access network device or a module (for example, a circuit, a chip (for example, a modem chip, or an SoC chip or a SIP chip including a modem core), a chip system, or a processor) in the access network device; or may be a logical node, a logical module, or software that can implement all or some functions of the access network device. The communication apparatus has a function of implementing the second aspect. For example, the communication apparatus includes a corresponding module, unit, or means for performing the operations in the second aspect. The module, the unit, or the means may be implemented by software, may be implemented by hardware, or may be implemented by hardware executing corresponding software.

In a possible design, the communication apparatus includes an interface unit and a processing unit. The interface unit may be configured to: receive and send signals, to implement communication between the communication apparatus and another apparatus. The processing unit may be configured to perform some internal operations of the communication apparatus. Functions performed by the processing unit and the interface unit may correspond to the operations in the second aspect.

In a possible design, the communication apparatus includes a processor, and the processor may be configured to be coupled to a memory. The memory may store a computer program or instructions necessary for implementing functions in the second aspect. The processor may execute the computer program or the instructions stored in the memory. When the computer program or the instructions are executed, the communication apparatus is caused to implement the method in any possible design of the second aspect.

In a possible design, the communication apparatus includes a processor and a memory. The memory may store a computer program or instructions necessary for implementing functions in the second aspect. The processor may execute the computer program or the instructions stored in the memory. When the computer program or the instructions are executed, the communication apparatus is caused to implement the method in any possible design of the second aspect.

In a possible design, the communication apparatus includes a processor and an interface circuit. The processor is configured to communicate with another apparatus through the interface circuit, and perform the method in any possible design of the second aspect.

It may be understood that in the third aspect or the fourth aspect, the processor may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

**According to a fifth aspect,** this application provides a communication system. The communication system may include the communication apparatus according to the third aspect and the communication apparatus according to the fourth aspect. For example, the communication system includes a terminal and an access network device. The terminal may be configured to perform the communication method provided in the first aspect, and the access network device may be configured to perform the communication method provided in the second aspect.

**According to a sixth aspect,** this application provides a computer-readable storage medium. The computer storage medium stores a computer program or instructions. When the computer program or the instructions are executed, the method in any one of the possible designs of the first aspect or the second aspect is implemented.

**According to a seventh aspect,** this application provides a computer program product. The computer program product includes computer program code. When the computer program code is run, the method in any one of the possible designs of the first aspect or the second aspect is implemented.

**According to an eighth aspect,** this application provides a chip. The chip is configured to read a computer program stored in a memory, to perform the method in any one of the possible designs of the first aspect or the second aspect.

For technical effects that can be achieved in any one of the third aspect to the eighth aspect, refer to the descriptions of the technical effects that can be achieved in any one of the possible designs of the first aspect or the second aspect. Repeated details are not described.

## BRIEF DESCRIPTION OF DRAWINGS

FIG. 1 is a diagram of an architecture of a communication system according to an embodiment of this application;
FIG. 2 is a diagram of an architecture of another communication system according to an embodiment of this application;
FIG. 3 is a diagram of an application scenario according to an embodiment of this application;
FIG. 4 is a flowchart of a communication method according to an embodiment of this application;
FIG. 5 is a diagram of a structure of a communication apparatus according to an embodiment of this application; and
FIG. 6 is a diagram of a structure of another communication apparatus according to an embodiment of this application.

## DESCRIPTION OF EMBODIMENTS

The following describes the technical solutions in embodiments of this application with reference to accompanying drawings in embodiments of this application. The technical solutions in embodiments of this application can be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system (for example, a long term evolution (long term evolution, LTE) system), a 5G mobile communication system (for example, a new radio (new radio, NR) system), and a future evolved communication system (for example, a 6th generation (6th generation, 6G) mobile communication system).

All aspects, embodiments, or features are presented in this application by describing a system that may include a plurality of devices, components, modules, and the like. It should be appreciated and understood that each system may include another device, component, module, and the like, and/or may not include all devices, components, modules, and the like described with reference to the accompanying drawings. In addition, a combination of these solutions may be used.

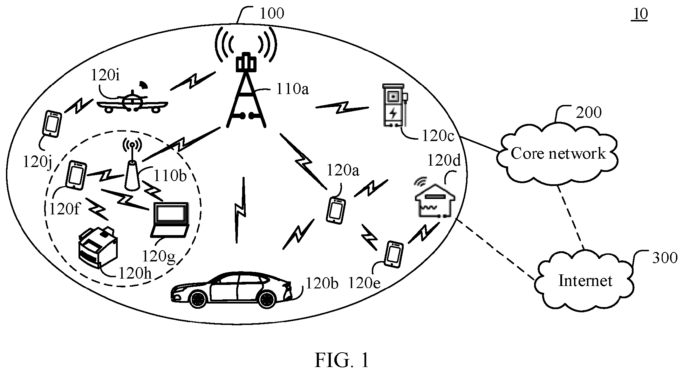

For ease of understanding of embodiments of this application, FIG. 1 is a diagram of a possible and non-limiting system. As shown in FIG. 1, the communication system 10 includes a radio access network (radio access network, RAN) 100 and a core network (core network, CN) 200. Optionally, the communication system 10 may further include an internet 300.

The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a core network logical function and a radio access network logical function.

The RAN 100 may be a cellular system related to the 3rd generation partnership project (3rd generation partnership project, 3GPP), for example, a 4G mobile communication system, a 5G mobile communication system, or a future-oriented evolved system (for example, a 6G mobile communication system). The RAN 100 may alternatively be an open radio access network (open RAN, O-RAN or ORAN), a cloud radio access network (cloud radio access network, CRAN), or a Wi-Fi system. The RAN 100 may alternatively be a communication system that integrates two or more of the foregoing systems.

The RAN node 110 may also be sometimes referred to as a RAN entity, an access node, or the like, and forms a part of the communication system, to help the terminal implement radio access. A plurality of RAN nodes 110 in the communication system 10 may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100

through the network element 120i, the network element 120i is a base station. However, for a base station 110a, the network element 120i is a terminal. Sometimes, both the RAN node 110 and the terminal 120 are referred to as communication apparatuses. For example, the network elements 110a and 110b in FIG. 1 may be understood as communication apparatuses having a base station function, and the network elements 120a to 120j may be understood as communication apparatuses having a terminal function.

The RAN node may also have different expressions, for example, an access network device. In this application, unless otherwise specified, the access network device is used for expression.

In a possible scenario, the access network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The access network device may be a macro base station (for example, 110a in FIG. 1), a micro base station or an indoor station (for example, 110b in FIG. 1), a relay node or a donor node, or a radio controller in a CRAN scenario. Optionally, the access network device may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or some of functions of the access network device in this application may alternatively be implemented by using a software function running on hardware, or may be implemented by using an instantiated virtualization function on a platform (for example, a cloud platform). The access network device in this application may alternatively be a logical node, a logical module, or software that can implement all or some of the functions of the access network device.

In another possible scenario, a plurality of access network devices coordinate to assist a terminal in implementing radio access, and different access network devices separately implement some of functions of a base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-UP, O-CU-UP), and the RU may also be referred to as an open RU (open RU, O-RU). Any one of the CU (or the CU-CP or the CU-UP), the DU, and the RU in this application may be implemented by using a software module, a hardware module, or a combination of a software module and a hardware module.

A module (for example, a circuit, a chip, a chip system, or a processor) that performs a corresponding communication function and/or processing function may be usually disposed in the access network device. A computer program or instructions used to perform a corresponding communication function and/or processing function may be further configured in the access network device.

The terminal may also be referred to as a terminal device, user equipment (user equipment, UE), a mobile station, a mobile terminal, or the like. The terminal can be widely used in various scenarios, for example, device-to-device (device-to-device, D2D) communication, V2X communication, machine-type communication (machine-type communication, MTC), internet of things (internet of things, IoT), virtual reality, augmented reality, industrial control, autonomous driving, remote medical, smart grid, smart furniture, smart office, smart wearable, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A module (for example, a circuit, a chip, a chip system, or a processor) that performs a corresponding communication function and/or processing function may be usually disposed in the terminal. A computer program or instructions used to perform a corresponding communication function and/or processing function may be further configured in the terminal. A device form of the terminal is not limited in embodiments of this application.

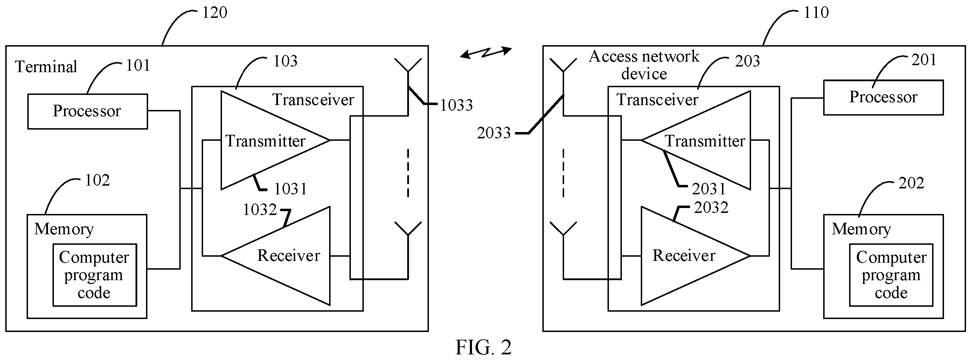

In the communication system shown in FIG. 1, communication between each access network device and each terminal device may be alternatively represented in another form. For example, as shown in FIG. 2, the terminal device 120 includes a processor 101, a memory 102, and a transceiver 103, and the transceiver 103 includes a transmitter 1031, a receiver 1032, and an antenna 1033. The access network device 110 includes a processor 201, a memory 202, and a transceiver 203, and the transceiver 203 includes a transmitter 2031, a receiver 2032, and an antenna 2033. The receiver 1032 may be configured to receive a signal through the antenna 1033, and the transmitter 1031 may be configured to send a signal to the access network device 110 through the antenna 1033. The transmitter 2031 may be configured to send a signal to the terminal 120 through the antenna 2033, and the receiver 2032 may be configured to receive, through the

antenna 2033, a signal sent by the terminal 120.

The communication system and service scenarios described in embodiments of this application are intended to describe the technical solutions in embodiments of this application more clearly, and do not constitute a limitation on the technical solutions provided in embodiments of this application. A person of ordinary skill in the art may learn that: With evolution of network architectures and emergence of new service scenarios, the technical solutions provided in embodiments of this application are also applicable to similar technical problems.

The following first explains and describes related terms in embodiments of this application. It should be noted that, these explanations are intended to make embodiments of this application easier to understand, but should not be construed as a limitation on the protection scope claimed in this application.

(1) **PDCCH:**

In a mobile communication system, a PDCCH may be used for transmission of DCI. The DCI mainly indicates at least one of the following: (1) downlink scheduling information, used by a terminal to receive a physical downlink shared channel (physical downlink shared channel, PDSCH); (2) uplink scheduling information, used by the terminal to send a physical uplink shared channel (physical uplink shared channel, PUSCH); and (3) other physical layer control information, for example, control signaling such as a slot format indicator (slot format indicator, SFI), a resource pre-emption indicator (pre-emption indicator, PI), and a power control command, to assist the terminal in receiving and sending data.

A signal carried on the PDCCH is referred to as a PDCCH signal. In this application, the PDCCH signal may be briefly referred to as a PDCCH. In other words, the PDCCH may be a physical downlink control channel, or may be a signal transmitted on a physical downlink control channel.

Before an access network device sends a PDCCH to a terminal, the access network device may configure, for the terminal, parameters related to transmission of the PDCCH (for example, a control resource set configuration and a search space (search space, SS) configuration), to assist the terminal in receiving the PDCCH.

(2) **Control resource set:**

The control resource set may be used to configure frequency domain resource information of a PDCCH (for example, resource blocks (resource blocks, RBs) occupied by the PDCCH) and a part of time domain resource information of the PDCCH (for example, a quantity of symbols occupied by the PDCCH). An access network device may configure one or more control resource sets for a terminal for different purposes. One control resource set may be associated with one or more search spaces.

The following shows a configuration example of a control resource set:

```
ControlResourceSet ::=                  SEQUENCE {
        controlResourceSetId                    ControlResourceSetId,
        frequencyDomainResources                BIT STRING (SIZE (45)),
    duration                                INTEGER (1..maxCoReSetDuration),
    cce-REG-MappingType                     CHOICE {
         interleaved                            SEQUENCE {
              reg-BundleSize                         ENUMERATED {n2, n3, n6},
              interleaverSize                        ENUMERATED {n2, n3, n6},
              shiftIndex
INTEGER(0..maxNrofPhysicalResourceBlocks-1)
         },
         nonInterleaved                         NULL
        },
    precoderGranularity                     ENUMERATED {sameAsREG-bundle,
allContiguousRBs},
    tci-StatesPDCCH-ToAddList               SEQUENCE(SIZE (1..maxNrofTCI-
StatesPDCCH)) OF TCI-StateId
    tci-StatesPDCCH-ToReleaseList           SEQUENCE(SIZE (1..maxNrofTCI-
StatesPDCCH)) OF TCI-StateId
        tci-PresentInDCI                        ENUMERATED {enabled}
        pdcch-DMRS-ScramblingID                 INTEGER (0..65535)
}
```

Some parameters in this example are described as follows:

controlResourceSetId indicates an index of the control resource set;
frequencyDomainResources indicates a frequency domain resource of the control resource set, and may be a bitmap (bitmap), where each bit (bit) in the bitmap corresponds to six consecutive RBs;
duration indicates a quantity of consecutive orthogonal frequency division multiplexing (orthogonal frequency division multiplex or orthogonal frequency division multiplexing, OFDM) symbols occupied by a time domain resource of the control resource set, or a quantity of consecutive OFDM symbols occupied by a PDCCH;
cce-REG-MappingType indicates a mapping mode between a CCE and resource element groups (resource element groups, REGs), where the mapping mode includes interleaved and non-interleaved;
precoderGranularity indicates a precoding granularity of the PDCCH;
tci-StatesPDCCH-ToAddList indicates that one or more transmission configuration index (transmission configuration index, TCI)-states (states) are to be added;
tci-StatesPDCCH-ToReleaseList indicates that one or more TCI-states are to be released;
tci-PresentInDCI indicates whether DCI includes a TCI field; and
pdcch-DMRS-ScramblingID indicates a scrambling identifier used by the PDCCH.

In some embodiments, a PDCCH resource (for example, one or more symbols, or one or more RBs) configured for a control resource set may be referred to as a control resource set. In other words, the control resource set may represent the PDCCH resource, or may represent a configuration parameter of the PDCCH resource.

(3) **Search space:**

The search space may also be referred to as a search space set (search space set), and is mainly used to configure time domain resource information of a PDCCH, or used to configure information related to a PDCCH blind detection. For example, the search space may include: a time domain periodicity (or a blind detection periodicity), indicating a quantity of slots (slots) between consecutive occurrences of the search space; a monitoring occasion (monitoring occasion, MO) in one slot, indicating symbols, in which the PDCCH may be located, in the slot; an aggregation level of the PDCCH, indicating a quantity of frequency domain resources used to carry the PDCCH, a quantity of PDCCH candidates (PDCCH candidates) at each aggregation level, and the like.

In some embodiments, a PDCCH resource configured for the search space may be referred to as a search space. In other words, the search space may represent the PDCCH resource, or may represent a configuration parameter of the PDCCH resource.

(4) **Monitoring occasion:**

One search space may include one or more monitoring occasions. In some embodiments, a monitoring symbol may be indicated by using a parameter monitoring symbols within a slot (monitoringSymbolsWithinSlot). The monitoringSymbolsWithinSlot parameter is a 14-bit bitmap, and each bit corresponds to one OFDM symbol. If a value of a bit is 1, it indicates that an OFDM symbol corresponding to the bit is a $1^{st}$ OFDM symbol of one monitoring occasion, that is, X consecutive OFDM symbols starting from the OFDM symbol correspond to the monitoring occasion. X is indicated by a duration parameter in a control resource set. For example, if a value of monitoringSymbolsWithinSlot is 10000100000000, and a value of the duration parameter of the associated control resource set is 3, the search space has two monitoring occasions, a $1^{st}$ monitoring occasion is located in $1^{st}$ to $3^{rd}$ OFDM symbols, and a second monitoring occasion is located in $6^{th}$ to $8^{th}$ OFDM symbols.

In some embodiments, a PDCCH resource configured for the monitoring occasion may be referred to as a monitoring occasion. In other words, the monitoring occasion may represent the PDCCH resource, or may represent a configuration parameter of the PDCCH resource.

(5) **PDCCH candidate (PDCCH candidate):**

The PDCCH candidate may also be referred to as a potential PDCCH or a candidate PDCCH, and is a time-frequency resource position at which an access network device may send a PDCCH, in other words, a time-frequency resource position at which a PDCCH may exist is referred to as a PDCCH candidate. One search space may include one or more PDCCH candidates, and the one or more PDCCH candidates may be included in a monitoring occasion included in the search space. The access network device may or may not send a PDCCH on a PDCCH candidate. The PDCCH candidate may be configured based on a set aggregation level. For example, the access network device may configure two PDCCH candidates whose aggregation levels are 4 and four PDCCH candidates whose aggregation levels are 8 for a terminal. In this case, the terminal performs blind detections on the two PDCCH candidates whose aggregation levels are 4, and performs blind detections on the four PDCCH candidates whose aggregation levels are 8. The access network device configures the PDCCH candidates to control a quantity of blind detections (monitored PDCCH candidate) at each aggregation level, to control complexity of PDCCH blind detection. A time-frequency position of the PDCCH candidate at each aggregation level is obtained through calculation based on a formula. The terminal may determine the time-frequency position of the PDCCH candidate at each aggregation level, to receive a PDCCH at the time-frequency position.

In some embodiments, a PDCCH resource configured for the PDCCH candidate may be referred to as a PDCCH candidate. In other words, the PDCCH candidate may indicate the PDCCH resource, or may indicate a configuration parameter of the PDCCH resource.

The following shows a configuration example of a search space:

```
SearchSpace ::=                          SEQUENCE {
    searchSpaceId                            SearchSpaceId,
  controlResourceSetId                     ControlResourceSetId
  monitoringSlotPeriodicityAndOffset      CHOICE {…}
  duration                                 INTEGER (2..2559)
  monitoringSymbolsWithinSlot              BIT STRING (SIZE (14))
  nrofCandidates                           SEQUENCE {…}
    searchSpaceType                          CHOICE {…}
}
```

Some parameters in this example are described as follows:

searchSpaceId indicates an index of the search space;
controlResourceSetId indicates an index of a control resource set associated with the search space;
monitoringSlotPeriodicityAndOffset indicates a periodicity of the search space and a start slot of the search space in one periodicity;
duration indicates a quantity of slots occupied by the search space in one periodicity;
monitoringSymbolsWithinSlot indicates a monitoring occasions in one slot;
nrofCandidates indicates a quantity of blind detections corresponding to the search space; and
searchSpaceType indicates a type of the blind detection space, and is used to determine a type of a PDCCH corresponding to the blind detection space.

It should be understood that terms such as the control resource set, the search space, the monitoring occasion, or the PDCCH candidate in this application are all for ease of description, and are not limited to literal meanings. For example, the control resource set may generally refer to a configuration parameter of PDCCH frequency domain information, and may be replaced with any other term representing the PDCCH frequency domain information. For another example, the search space may generally refer to a configuration parameter of PDCCH time domain information or PDCCH blind detection information, and may be replaced with any other term representing the PDCCH time domain information or the PDCCH blind detection information. For still another example, the monitoring occasion may generally refer to a configuration parameter of a time domain position of a PDCCH in one slot, and may be replaced with any other term representing the time domain position of the PDCCH in the slot. For still another example, the PDCCH candidate may generally refer to a configuration parameter of a time-frequency resource position at which a PDCCH may exist, and may be replaced with any other term representing the time-frequency resource position at which in the PDCCH may exist.

The control resource set and its associated search space may be combined to determine all possible time-frequency resource positions of the PDCCH, and the terminal may perform PDCCH blind detections at these time-frequency resource positions.

(6) **PDCCH blind detection:**

The PDCCH blind detection is a method for receiving a PDCCH by a terminal, and means that when the terminal is not sure of a specific time-frequency resource position at which the PDCCH sent by an access network device to the terminal is located, the terminal attempts to receive the PDCCH according to a blind trial method at each time-frequency resource position (that is, each PDCCH candidate) at which the PDCCH may exist. A process in which the terminal traverses each PDCCH candidate, and sequentially determines whether the PDCCH for the terminal exists on a time-frequency resource corresponding to each PDCCH candidate is blind detection.

To ensure that a quantity of blind detections performed by the terminal in one slot in one cell or one BWP does not exceed a maximum quantity of blind detections specified in a protocol, and a quantity of non-overlapping CCEs involved in a blind detection does not exceed a maximum quantity of non-overlapping CCEs specified in the protocol, the terminal may perform a PDCCH blind detection overbooking (overbooking) mechanism. The quantity of non-overlapping CCEs means that if CCEs corresponding to at least two PDCCH candidates overlap, the overlapping CCEs may be counted once, and are not counted repeatedly.

The overbooking mechanism may also be referred to as a mechanism for resolving a configuration of an excessive quantity of blind detections or a blind detection capability overbooking mechanism. The overbooking mechanism is a mechanism in which whether a blind detection needs to be performed on each search space is determined based on an available blind detection resource, for example, a quantity of blind detections and/or a quantity of non-overlapping CCEs. Currently, the overbooking mechanism may include: A terminal sequentially allocates, based on an order of a plurality of search spaces, a maximum quantity of blind detections and a maximum quantity of non-overlapping CCEs to each search space. For each search space, if a quantity of remaining blind detections is greater than or equal to a quantity of blind detections corresponding to the search space, and a maximum quantity of remaining non-overlapping CCEs is greater than or equal to a quantity of non-overlapping CCEs corresponding to the search space, the terminal may allocate the quantity of blind detections and the quantity of non-overlapping CCEs to the search space, subtract the quantity of blind detections corresponding to the search space from the quantity of remaining blind detections to obtain an updated quantity of remaining blind detections, and subtract the quantity of non-overlapping CCEs corresponding to the search space from the quantity of remaining non-overlapping CCEs to obtain an updated quantity of remaining non-overlapping CCEs. If the quantity of remaining blind detections is less than the quantity of blind detections corresponding to the search space, and/or the quantity of remaining non-overlapping CCEs is less than the quantity of non-overlapping CCEs corresponding to the search space, the terminal stops allocating the quantity of blind detections and the quantity of non-overlapping CCEs.

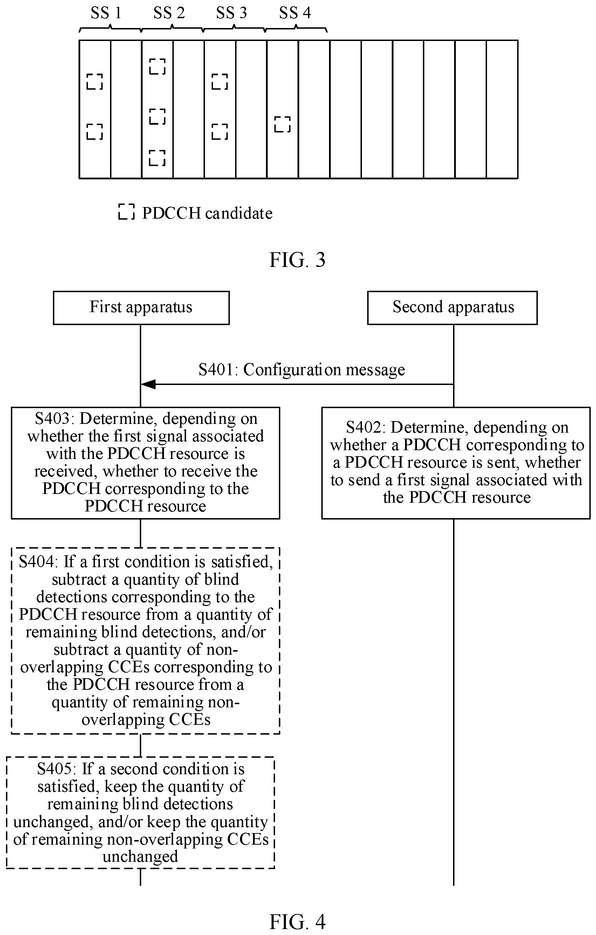

For example, the search space is shown in FIG. 3. It is assumed that a maximum quantity of blind detections specified in a protocol is 4, and a maximum quantity of non-overlapping CCEs specified in the protocol is 8. For four search spaces (namely, an SS 1, an SS 2, an SS 3, and an SS 4), corresponding quantities of blind detections are respectively 2, 3, 2, and 1, and corresponding quantities of non-overlapping CCEs are respectively 4, 6, 4, and 2. It is assumed that the SS 4 is a common search space (common search space, CSS) and other search spaces are UE specific search spaces (UE specific search space, USS). An order of the four search spaces is the SS 4, the SS 1, the SS 2, and the SS 3.

For the SS 4, a quantity of remaining blind detections is 4, and a quantity of remaining non-overlapping CCEs is 8. The terminal may allocate the quantity 1 of blind detections and the quantity 2 of non-overlapping CCEs to the SS 4, subtract the quantity 1 of blind detections corresponding to the SS 4 from the quantity 4 of remaining blind detections to obtain an updated quantity 3 of remaining blind detections, and subtract the quantity 2 of non-overlapping CCEs corresponding to the SS 4 from the quantity 8 of remaining non-overlapping CCEs to obtain an updated quantity 6 of remaining non-overlapping CCEs.

For the SS 1, because the quantity 2 of blind detections corresponding to the SS 1 is less than or equal to the quantity 3 of remaining blind detections, and the quantity 4 of non-overlapping CCEs corresponding to the SS 1 is less than or equal to the quantity 6 of remaining non-overlapping CCEs, the terminal may allocate the quantity 2 of blind detections and the quantity 4 of non-overlapping CCEs to the SS 1. The terminal subtracts the quantity 2 of blind detections corresponding to the SS 1 from the quantity 3 of remaining blind detections to obtain an updated quantity 1 of remaining blind detections, and subtracts the quantity 4 of non-overlapping CCEs corresponding to the SS 1 from the quantity 6 of remaining non-overlapping CCEs to obtain an updated quantity 2 of remaining non-overlapping CCEs.

For the SS 2, because the quantity 3 of blind detections corresponding to the SS 2 is greater than the quantity 1 of remaining blind detections, and the quantity 6 of non-overlapping CCEs corresponding to the SS 2 is greater than the quantity 2 of remaining non-overlapping CCEs, the terminal stops allocating the quantity of blind detections and the quantity of non-overlapping CCEs.

According to the foregoing method, the terminal may perform blind detections on the SS 1 and the SS 4, and does not perform any blind detection on the SS 2 and the SS 3.

(7) In the following descriptions of this application, less than or equal to may be replaced with less than, and/or greater than may be replaced with greater than or equal to.

(8) In the following descriptions of this application, an order may be replaced with at least one of the following: a priority, a priority order, or the like.

(9) In the following descriptions of this application, "sending information to a device (for example, a terminal)" may be understood as that a destination end of the information is the device, and may include directly or indirectly sending the information to the device. "Receiving information from a device (for example, a terminal)" or "receiving information that is from a device (for example, a terminal)" may be understood as that a source end of the information is the device, and may include directly or indirectly receiving the information from the device. Information may undergo necessary processing, for example, a format change, between a source end for sending the information and a destination end. However, the destination end may understand valid information from the source end. Similar expressions in this application may be understood similarly, and details are not described herein again.

Currently, a terminal performs a PDCCH blind detection based on static information, for example, a quantity of blind detections and a quantity of non-overlapping CCEs, that correspond to a search space, to receive a PDCCH. Provided that a quantity of blind detections and a quantity of non-overlapping CCEs for one search space are respectively less than a quantity of blind detections and a quantity of non-overlapping CCEs that are currently remaining, the terminal

determines, based on this, whether to allocate the quantity of blind detections and the quantity of non-overlapping CCEs to the search space. This method causes a lot of unnecessary blind detections, and a quantity of blind detections and a quantity of non-overlapping CCEs of the terminal are also high. As a result, complexity of receiving the PDCCH by the terminal is increased.

In addition, as described above, the terminal sequentially allocates, based on an order of a plurality of search spaces, a maximum quantity of blind detections and a maximum quantity of non-overlapping CCEs to each search space. Because a search space that is ranked higher may have no corresponding PDCCH, the terminal performs an unnecessary blind detection on the search space, and consequently, energy consumption of the terminal is high. A search space that is ranked lower may have a corresponding PDCCH, but because neither a quantity of blind detections nor a quantity of non-overlapping CCEs is allocated, the terminal does not perform any blind detection on the search space, and consequently, the terminal fails to receive the PDCCH. For example, in the scenario shown in FIG. 3, the terminal may perform blind detections on the SS 1 and the SS 4, and does not perform any blind detection on the SS 2 and the SS 3. If the SS 1 does not have a corresponding PDCCH, the terminal still performs a blind detection on the SS 1, and consequently, energy consumption of the terminal is high. If the SS 2 has a corresponding PDCCH, the terminal cannot receive the PDCCH.

In view of this, embodiments of this application provide a communication method. FIG. 4 is a schematic flowchart corresponding to a communication method provided in embodiments of this application. In FIG. 4, the method is illustrated by using an example in which a first apparatus and a second apparatus are used as execution bodies of the interaction illustration. However, the execution bodies of the interaction illustration are not limited in this application. For example, the first apparatus may be a terminal; may be a module, for example, a circuit, a chip (for example, a modem chip, or an SoC chip or a SIP chip including a modem core), a chip system, or a processor, used in the terminal; or may be a logical node, a logical module, or software that can implement all or some functions of the terminal. The second apparatus may be an access network device; may be a module, for example, a circuit, a chip (for example, a modem chip, or an SoC chip or a SIP chip including a modem core), a chip system, or a processor, used in the access network device; or may be a logical node, a logical module, or software that can implement all or some functions of the access network device. As shown in FIG. 4, the method includes the following steps.

**S401:** The second apparatus may send a configuration message, and correspondingly, the first apparatus may receive the configuration message.

In some possible manners, the second apparatus may be a base station, and the second apparatus may send the configuration message to the first apparatus.

In some other possible manners, the second apparatus may implement a communication function with a terminal through a first node, in other words, the first node may implement a signal transceiver function. The second apparatus may further implement a processing function through a second node. For example, the first node may send a configuration message to the first apparatus. Optionally, the configuration message may be jointly determined by the first node and the second node, or may be received by the first node from the second node. For example, the first node is an O-DU or a DU, and the second node is an O-CU or a CU.

In this embodiment of this application, the first node and/or the second node may be located in the second apparatus, or may be located outside the second apparatus. This is not limited herein. In addition, the first node and the second node may be a same device, or may be separate and independent devices. This is not limited either.

The configuration message may include information about a PDCCH resource. In other words, the configuration message may be used to configure the PDCCH resource; or the configuration message includes a configuration parameter of the PDCCH resource. The PDCCH resource may include at least one of the following: a control resource set, a search space, a monitoring occasion, or a PDCCH candidate. For specific content of the control resource set, the search space, the monitoring occasion, and the PDCCH candidate, refer to the descriptions of the control resource set, the search space, the monitoring occasion, and the PDCCH candidate in the explanations of the foregoing related terms. For configuration manners of the control resource set, the search space, the monitoring occasion, and the PDCCH candidate, also refer to the descriptions of the control resource set, the search space, the monitoring occasion, and the PDCCH candidate in the explanations of the foregoing related terms. Details are not described herein again.

The configuration message may be a conventional message, or may be a new message. The configuration message may include one message, or may include a plurality of messages. This is not limited in this application.

Optionally, the configuration message may further include information about a first signal associated with the PDCCH resource. In other words, the configuration message may be further used to configure the first signal associated with the PDCCH resource; or the configuration message may further indicate an association relationship between the PDCCH resource and the first signal.

The first signal may be used to determine (or indicate) whether a PDCCH corresponding to the PDCCH resource is sent. In other words, the first signal may be used to determine (or indicate) whether a PDCCH corresponding to the first signal is sent, and the PDCCH corresponding to the first signal may be the PDCCH corresponding to the PDCCH resource associated with the first signal. The first signal may be sent when the PDCCH corresponding to the PDCCH resource is sent, and an apparatus that sends the first signal may be the second apparatus. Therefore, the first apparatus may

determine, depending on whether the first signal associated with the PDCCH resource is received, whether the PDCCH corresponding to the PDCCH resource is sent. For example, if the first apparatus receives the first signal associated with the PDCCH resource, the first apparatus can determine that the PDCCH corresponding to the PDCCH resource is sent. For another example, if the first apparatus does not receive the first signal associated with the PDCCH resource, the first apparatus can determine that the PDCCH corresponding to the PDCCH resource is not sent.

A specific name of the first signal is not limited in this application. For example, a name of the first signal may be a discovery control signal (control discovery signal, CDS), indicating that the first signal may be used by the terminal to discover the PDCCH. The first signal may also have another name, provided that the foregoing function is implemented.

In some possible manners, the information about the first signal associated with the PDCCH resource may include at least one of the following information 1 to information 3:

**Information 1:** First parameter.

The first parameter may be used to determine (or indicate) whether the first signal is used; or the first parameter may be used to determine (or indicate) whether the first apparatus receives the PDCCH based on the first signal. It should be understood that when the first signal is used, the first apparatus and the second apparatus may perform the method shown in FIG. 4. When the first signal is not used, the first apparatus and the second apparatus may perform transmission of the PDCCH according to a conventional method. For example, the second apparatus may send the PDCCH, and the first apparatus may receive the PDCCH through PDCCH blind detection. For specific content of the PDCCH blind detection, refer to the descriptions of the PDCCH blind detection in the explanations of the foregoing related terms. Details are not described herein again.

There may be a plurality of manners, for example, a manner a1, a manner a2, or a manner a3, in which the first parameter is used to determine (or indicates) whether the first signal is used.

**Manner a1:** The first parameter may have two values, which respectively indicate that the first signal is used and that the first signal is not used. For example, if the value of the first parameter is a first value (for example, 0), it indicates that the first signal is used; or if the value of the first parameter is a second value (for example, 1), it indicates that the first signal is not used.

**Manner a2:** The first parameter may have one value, indicating that the first signal is used. In other words, if the configuration parameter includes the first parameter, it indicates that the first signal is used; or if the configuration parameter does not include the first parameter, it indicates that the first signal is not used.

**Manner a3:** The first parameter may have one value, indicating that the first signal is not used. In other words, if the configuration parameter does not include the first parameter, it indicates that the first signal is used; or if the configuration parameter includes the first parameter, it indicates that the first signal is not used.

**Information 2:** indicates a type of the first signal.

The type of the first signal may be a type of a used first signal, for example, may be a type of a first signal used by the second apparatus, and/or a type of a first signal allowed to be used by the first apparatus.

Optionally, the type of the used first signal may be configured by the second apparatus for the first apparatus. For example, the first apparatus reports a type that is of the first signal and supported by the first apparatus, and the second apparatus may configure the first apparatus to use or not to use the type of the first signal. For another example, the first apparatus reports a plurality of types that are of the first signal and supported by the first apparatus, and the second apparatus may configure the first apparatus to use at least one of the plurality of types of the first signal. For still another example, a standard, a protocol, or a system specifies (or supports) one or more types of the first signal, and the second apparatus may configure the first apparatus to use one of the one or more types of the first signal.

The information 2 may explicitly indicate the type of the first signal. For example, the information 2 may include the type of the first signal. Alternatively, the information 2 may implicitly indicate the type of the first signal. For example, the information 2 may include information that has a correspondence with the type of the first signal.

**Information 3:** indicates the association relationship between the first signal and the PDCCH resource.

For example, the association relationship between the first signal and the PDCCH resource may include at least one of the following relationship 1 to relationship 4:

**Relationship 1:** an association relationship between the first signal and the control resource set.

Optionally, one first signal may be associated with one control resource set, or one first signal may be associated with a plurality of control resource sets.

In some examples, the information 3 may indicate one or more control resource sets associated with the first signal. For example, if the configuration message is used to configure a first signal CDS 1, and the information 3 in the configuration message may include an index (or an identifier) of a control resource set associated with the CDS 1, for example, a CORESET 1 and a CORESET 2, it indicates that the CDS 1 is associated with the CORESET 1 and the CORESET 2.

In some other examples, the information 3 may indicate one or more first signals associated with the control resource set. For example, if the configuration message is used to configure a control resource set CORESET 1, and the information 3 in the configuration message may include an index (or an identifier) of a first signal associated with the

CORESET 1, for example, a CDS 1 and a CDS 2, it indicates that the CORESET 1 is associated with the CDS 1 and the CDS 2.

**Relationship 2:** an association relationship between the first signal and the search space.

Optionally, one first signal may be associated with one search space, or one first signal may be associated with a plurality of search spaces.

In some examples, the information 3 may indicate one or more search spaces associated with the first signal. For example, if the configuration message is used to configure a first signal CDS 1, and the information 3 in the configuration message includes an index (or an identifier) of a search space associated with the CDS 1, for example, an SS 1 and an SS 2, it indicates that the CDS 1 is associated with the SS 1 and the SS 2.

In some other examples, the information 3 may indicate one or more first signals associated with the search space. For example, if the configuration message is used to configure a search space SS 1, and the information 3 in the configuration message includes an index (or an identifier) of a first signal associated with the SS 1, for example, a CDS 1 and a CDS 2, it indicates that the SS 1 is associated with the CDS 1 and the CDS 2.

**Relationship 3:** an association relationship between the first signal and the monitoring occasion;

Optionally, one first signal may be associated with one monitoring occasion, or one first signal may be associated with a plurality of monitoring occasions.

In some examples, the information 3 may indicate one or more monitoring occasions associated with the first signal. For example, if the configuration message is used to configure a first signal CDS 1, and the information 3 in the configuration message includes an index (or an identifier) of a monitoring occasion associated with the CDS 1, for example, an MO 1 and an MO 2, it indicates that the CDS 1 is associated with the MO 1 and the MO 2.

In some other examples, the information 3 may indicate one or more first signals associated with the monitoring occasion. For example, if the configuration message is used to configure a monitoring occasion MO 1, and the information 3 in the configuration message includes an index (or an identifier) of a first signal associated with the MO 1, for example, a CDS 1 and a CDS 2, it indicates that the MO 1 is associated with the CDS 1 and the CDS 2.

**Relationship 4:** an association relationship between the first signal and the PDCCH candidate.

Optionally, one first signal may be associated with one PDCCH candidate, or one first signal may be associated with a plurality of PDCCH candidates.

In some examples, the information 3 may indicate one or more PDCCH candidates associated with the first signal. For example, if the configuration message is used to configure a first signal CDS 1, and the information 3 in the configuration message includes an index (or an identifier) of a PDCCH candidate associated with the CDS 1, for example, a PDCCH candidate 1 and a PDCCH candidate 2, it indicates that the CDS 1 is associated with the PDCCH candidate 1 and the PDCCH candidate 2.

In some other examples, the information 3 may indicate one or more first signals associated with the PDCCH candidate. For example, if the configuration message is used to configure a PDCCH candidate 1, and the information 3 in the configuration message includes an index (or an identifier) of a first signal associated with the PDCCH candidate 1, for example, a CDS 1 and a CDS 2, it indicates that the PDCCH candidate 1 is associated with the CDS 1 and the CDS 2.

It should be understood that the information 1 to the information 3 do not necessarily exist in the configuration message at the same time. For example, if enabling of the first signal is specified in a system by default or in a standard, the configuration message may not include the information 1. For another example, if the type of the first signal is specified in a system by default or in a standard, the configuration message may not include the information 2. For still another example, if a resource associated with each type of first signal is specified in a system by default or in a standard, the configuration message may not include the information 3.

Optionally, the information about the PDCCH resource and the information about the first signal associated with the PDCCH resource may be carried in a same message, or may be carried in different messages. This is not limited in this application.

**S402:** The second apparatus may determine, depending on whether the PDCCH corresponding to the PDCCH resource is sent, whether to send the first signal associated with the PDCCH resource.

If the second apparatus sends the PDCCH corresponding to the PDCCH resource, the second apparatus may determine to send the first signal associated with the PDCCH resource; and/or if the second apparatus does not send the PDCCH corresponding to the PDCCH resource, the second apparatus may determine not to send the first signal associated with the PDCCH resource.

In some possible manners, after determining whether to send the first signal associated with the PDCCH resource, the second apparatus may perform a corresponding operation based on a determining result. For example, if the second apparatus determines to send the first signal associated with the PDCCH resource, in other words, if the second apparatus sends the PDCCH corresponding to the PDCCH resource, the second apparatus may send the first signal associated with the PDCCH resource. Optionally, before sending the PDCCH corresponding to the PDCCH resource, the second apparatus may send the first signal associated with the PDCCH resource. Alternatively, when sending the PDCCH corresponding to the PDCCH resource, the second apparatus may send the first signal associated with the PDCCH

resource. For another example, if the second apparatus determines not to send the first signal associated with the PDCCH resource, in other words, if the second apparatus does not send the PDCCH corresponding to the PDCCH resource, the second apparatus does not send the first signal associated with the PDCCH resource, in other words, the second apparatus may skip sending the first signal associated with the PDCCH resource.

In some examples, the second apparatus may be one of the following: a base station or a module used in a base station. If the second apparatus sends the PDCCH corresponding to the PDCCH resource, the second apparatus may send, to the first apparatus, the PDCCH corresponding to the PDCCH resource and the first signal associated with the PDCCH resource.

In some other examples, the second apparatus may implement a communication function with a terminal through a first node (for example, an O-DU or a DU), in other words, the first node may implement a signal transceiver function. The second apparatus may further implement a processing function through a second node (for example, an O-CU or a CU). If the second apparatus sends the PDCCH corresponding to the PDCCH resource, the first node may send, to the first apparatus, the PDCCH corresponding to the PDCCH resource and the first signal associated with the PDCCH resource.

It should be understood that there is also a correspondence between the PDCCH corresponding to the PDCCH resource and the first signal associated with the PDCCH resource. Therefore, S402 may also be replaced with the following: The second apparatus may determine, depending on whether the PDCCH is sent, whether to send the first signal corresponding to the PDCCH.

**S403:** The first apparatus may determine (or decide), depending on whether the first signal associated with the PDCCH resource is received, whether to receive the PDCCH corresponding to the PDCCH resource.

S403 may be implemented in a plurality of manners, for example, a manner b1 and/or a manner b2.

**Manner b1:** If a first condition is satisfied, the first apparatus may receive the PDCCH corresponding to the PDCCH resource. In other words, if the first condition is satisfied, the first apparatus may determine to receive the PDCCH corresponding to the PDCCH resource.

The first condition may include one or a combination of more of the following: a condition a1: the first apparatus receives the first signal associated with the PDCCH resource; a condition a2: a quantity of blind detections corresponding to the PDCCH resource is less than or equal to a quantity of remaining blind detections; or a condition a3: a quantity of non-overlapping CCEs corresponding to the PDCCH resource is less than or equal to a quantity of remaining non-overlapping CCEs.

The manner b1 is described below by using examples with reference to the condition 1.

In some examples, the first condition may include the condition a1. In other words, if the first apparatus receives the first signal corresponding to the PDCCH resource, the first apparatus may receive the PDCCH corresponding to the PDCCH resource. For specific content of the PDCCH resource, refer to the descriptions of the PDCCH resource in S401. Details are not described herein again. In this example, the first apparatus may determine to receive the PDCCH corresponding to the PDCCH resource, only when the first apparatus receives the first signal associated with the PDCCH resource. In this way, the first apparatus can be prevented from performing a blind detection on a PDCCH resource without a PDCCH, so that complexity of receiving the PDCCH by the first apparatus is reduced, and energy consumption of the first apparatus is reduced.

In some other examples, the first condition may include the condition a1 and the condition a2. In other words, if the first apparatus receives the first signal corresponding to the PDCCH resource, and the quantity of blind detections corresponding to the PDCCH resource is less than or equal to the quantity of remaining blind detections, the first apparatus may receive the PDCCH corresponding to the PDCCH resource. For example, if the first apparatus receives the first signal corresponding to the PDCCH resource, the quantity of blind detections corresponding to the PDCCH resource is 3, and the quantity of remaining blind detections is 4, the first apparatus may receive the PDCCH corresponding to the PDCCH resource. In this example, the first apparatus can be prevented from performing a blind detection on a PDCCH resource without a PDCCH, so that complexity of receiving the PDCCH by the first apparatus is reduced, and energy consumption of the first apparatus is reduced. In addition, this example can ensure that a quantity of blind detections performed by the first apparatus in one slot in one cell or one BWP does not exceed a maximum quantity of blind detections specified in a protocol.

In some still other examples, the first condition may include the condition a1 and the condition a3. In other words, if the first apparatus receives the first signal corresponding to the PDCCH resource, and the quantity of non-overlapping CCEs corresponding to the PDCCH resource is less than or equal to the quantity of remaining non-overlapping CCEs, the first apparatus may receive the PDCCH corresponding to the PDCCH resource. For example, if the first apparatus receives the first signal corresponding to the PDCCH resource, the quantity of non-overlapping CCEs corresponding to the PDCCH resource is 2, and the quantity of remaining non-overlapping CCEs is 4, the first apparatus may receive the PDCCH corresponding to the PDCCH resource. In this example, the first apparatus can be prevented from performing a blind detection on a PDCCH resource without a PDCCH, so that complexity of receiving the PDCCH by the first apparatus is reduced, and energy consumption of the first apparatus is reduced. In addition, this example can ensure that a quantity of non-overlapping CCEs involved in a blind detection performed by the first apparatus does not exceed a maximum quantity

of non-overlapping CCEs specified in a protocol.

In some still other examples, the first condition may include the condition a1 to the condition a3. In other words, if the first apparatus receives the first signal corresponding to the PDCCH resource, the quantity of blind detections corresponding to the PDCCH resource is less than or equal to the quantity of remaining blind detections, and the quantity of non-overlapping CCEs corresponding to the PDCCH resource is less than or equal to the quantity of remaining non-overlapping CCEs, the first apparatus may receive the PDCCH corresponding to the PDCCH resource. For example, if the first apparatus receives the first signal corresponding to the PDCCH resource, the quantity of blind detections corresponding to the PDCCH resource is 3, the quantity of remaining blind detections is 4, the quantity of non-overlapping CCEs corresponding to the PDCCH resource is 2, and the quantity of remaining non-overlapping CCEs is 4, the first apparatus may receive the PDCCH corresponding to the PDCCH resource. In this example, the first apparatus can be prevented from performing a blind detection on a PDCCH resource without a PDCCH, so that complexity of receiving the PDCCH by the first apparatus is reduced, and energy consumption of the first apparatus is reduced. In addition, this example can ensure that a quantity of blind detections performed by the first apparatus in one slot in one cell or one BWP does not exceed a maximum quantity of blind detections specified in a protocol, and a quantity of non-overlapping CCEs involved in a blind detection performed by the first apparatus does not exceed a maximum quantity of non-overlapping CCEs specified in the protocol.

Optionally, in the manner b1, the method shown in FIG. 4 may further include S404.

**S404:** If the first condition is satisfied, the first apparatus may subtract the quantity of blind detections corresponding to the PDCCH resource from the quantity of remaining blind detections to obtain an updated quantity of remaining blind detections, and/or the first apparatus may subtract the quantity of non-overlapping CCEs corresponding to the PDCCH resource from the quantity of remaining non-overlapping CCEs to obtain an updated quantity of remaining non-overlapping CCEs. Optionally, the first apparatus may continue to determine (or decide), by using the updated quantity of remaining blind detections and the updated quantity of non-overlapping CCEs, whether to receive a PDCCH corresponding to a subsequent PDCCH resource. For a determining manner, refer to S403. Details are not described herein again.

S404 is described below by using examples with reference to the first condition.

In some examples, the first condition may include the condition a1 and the condition a2. In other words, if the first apparatus receives the first signal corresponding to the PDCCH resource, and the quantity of blind detections corresponding to the PDCCH resource is less than or equal to the quantity of remaining blind detections, the first apparatus may subtract the quantity of blind detections corresponding to the PDCCH resource from the quantity of remaining blind detections to obtain an updated quantity of remaining blind detections. For example, if the first apparatus receives the first signal corresponding to the PDCCH resource, the quantity of blind detections corresponding to the PDCCH resource is 3, and the quantity of remaining blind detections is 4, the first apparatus may subtract the quantity 3 of blind detections corresponding to the PDCCH resource from the quantity 4 of remaining blind detections to obtain an updated quantity 1 of remaining blind detections. In this example, the first apparatus may allocate, to the PDCCH resource, the quantity of blind detections corresponding to the PDCCH resource. In this example, the first apparatus may update the quantity of remaining blind detections in a timely manner.

In some other examples, the first condition may include the condition a1 and the condition a3. In other words, if the first apparatus receives the first signal corresponding to the PDCCH resource, and the quantity of non-overlapping CCEs corresponding to the PDCCH resource is less than or equal to the quantity of remaining non-overlapping CCEs, the first apparatus may subtract the quantity of non-overlapping CCEs corresponding to the PDCCH resource from the quantity of remaining non-overlapping CCEs to obtain an updated quantity of remaining non-overlapping CCEs. For example, if the first apparatus receives the first signal corresponding to the PDCCH resource, the quantity of non-overlapping CCEs corresponding to the PDCCH resource is 2, and the quantity of remaining non-overlapping CCEs is 4, the first apparatus may subtract the quantity 2 of non-overlapping CCEs corresponding to the PDCCH resource from the quantity 4 of remaining non-overlapping CCEs to obtain an updated quantity 2 of remaining non-overlapping CCEs. In this example, the first apparatus may allocate, to the PDCCH resource, the quantity of non-overlapping CCEs corresponding to the PDCCH resource. In this example, the first apparatus may update the quantity of remaining non-overlapping CCEs in a timely manner.

In some still other examples, the first condition may include the condition a1 to the condition a3. In other words, if the first apparatus receives the first signal corresponding to the PDCCH resource, the quantity of blind detections corresponding to the PDCCH resource is less than or equal to the quantity of remaining blind detections, and the quantity of non-overlapping CCEs corresponding to the PDCCH resource is less than or equal to the quantity of remaining non-overlapping CCEs, the first apparatus may subtract the quantity of blind detections corresponding to the PDCCH resource from the quantity of remaining blind detections to obtain an updated quantity of remaining blind detections, and may subtract the quantity of non-overlapping CCEs corresponding to the PDCCH resource from the quantity of remaining non-overlapping CCEs to obtain an updated quantity of remaining non-overlapping CCEs. For example, if the first apparatus receives the first signal corresponding to the PDCCH resource, the quantity of blind detections corresponding to the

PDCCH resource is 3, the quantity of remaining blind detections is 4, the quantity of non-overlapping CCEs corresponding to the PDCCH resource is 2, and the quantity of remaining non-overlapping CCEs is 4, the first apparatus may subtract the quantity 3 of blind detections corresponding to the PDCCH resource from the quantity 4 of remaining blind detections to obtain an updated quantity 1 of remaining blind detections, and subtract the quantity 2 of non-overlapping CCEs corresponding to the PDCCH resource from the quantity 4 of remaining non-overlapping CCEs to obtain an updated quantity 2 of remaining non-overlapping CCEs. In this example, the first apparatus may allocate, to the PDCCH resource, the quantity of blind detections and the quantity of non-overlapping CCEs that correspond to the PDCCH resource. In this example, the first apparatus may update the quantity of remaining blind detections and the quantity of remaining non-overlapping CCEs in a timely manner.

**Manner b2:** If a second condition is satisfied, the first apparatus may skip reception (or a detection or a blind detection or measurement) of the PDCCH corresponding to the PDCCH resource. In other words, the first apparatus may not receive the PDCCH corresponding to the PDCCH resource; or the first apparatus may not configure (or skip configuring) a quantity of blind detections and/or a quantity of non-overlapping CCEs for the PDCCH resource.

The second condition may include one or a combination of more of the following: a condition b1: the first apparatus does not receive the first signal corresponding to the PDCCH resource; a condition b2: the first apparatus receives the first signal corresponding to the PDCCH resource, and a quantity of blind detections corresponding to the PDCCH resource is greater than a quantity of remaining blind detections; a condition b3: the first apparatus receives the first signal corresponding to the PDCCH resource, and a quantity of non-overlapping CCEs corresponding to the PDCCH resource is greater than a quantity of remaining non-overlapping CCEs; a condition b4: a quantity of blind detections corresponding to the PDCCH resource is greater than a quantity of remaining blind detections; or a condition b5: a quantity of non-overlapping CCEs corresponding to the PDCCH resource is greater than a quantity of remaining non-overlapping CCEs.

The manner b2 is described below by using examples with reference to the second condition.

In some examples, the second condition may include the condition b1. In other words, if the first apparatus does not receive the first signal corresponding to the PDCCH resource, the first apparatus may skip receiving the PDCCH corresponding to the PDCCH resource. For specific content of the PDCCH resource, refer to the descriptions of the PDCCH resource in S401. Details are not described herein again. In this example, when the first apparatus does not receive the first signal associated with the PDCCH resource, the first apparatus may skip receiving the PDCCH corresponding to the PDCCH resource. In this way, the first apparatus can be prevented from performing a blind detection on a PDCCH resource without a PDCCH, so that complexity of receiving the PDCCH by the first apparatus is reduced, and energy consumption of the first apparatus is reduced.

In some other examples, the second condition may include the condition b2. In other words, if the first apparatus receives the first signal corresponding to the PDCCH resource, and the quantity of blind detections corresponding to the PDCCH resource is greater than the quantity of remaining blind detections, the first apparatus may skip receiving the PDCCH corresponding to the PDCCH resource. For example, if the first apparatus receives the first signal corresponding to the PDCCH resource, the quantity of blind detections corresponding to the PDCCH resource is 3, and the quantity of remaining blind detections is 2, the first apparatus may skip receiving the PDCCH corresponding to the PDCCH resource. This example can ensure that a quantity of blind detections performed by the first apparatus in one slot in one cell or one BWP does not exceed a maximum quantity of blind detections specified in a protocol.

In some still other examples, the second condition may include the condition b3. In other words, if the first apparatus receives the first signal corresponding to the PDCCH resource, and the quantity of non-overlapping CCEs corresponding to the PDCCH resource is greater than the quantity of remaining non-overlapping CCEs, the first apparatus may skip receiving the PDCCH corresponding to the PDCCH resource. For example, if the first apparatus receives the first signal corresponding to the PDCCH resource, the quantity of non-overlapping CCEs corresponding to the PDCCH resource is 3, and the quantity of remaining non-overlapping CCEs is 2, the first apparatus may skip receiving the PDCCH corresponding to the PDCCH resource. This example can ensure that a quantity of non-overlapping CCEs involved in a blind detection performed by the first apparatus does not exceed a maximum quantity of non-overlapping CCEs specified in a protocol.

In some still other examples, the second condition may include the condition b2 and the condition b3. In other words, if the first apparatus receives the first signal corresponding to the PDCCH resource, the quantity of blind detections corresponding to the PDCCH resource is greater than the quantity of remaining blind detections, and the quantity of non-overlapping CCEs corresponding to the PDCCH resource is greater than the quantity of remaining non-overlapping CCEs, the first apparatus may skip receiving the PDCCH corresponding to the PDCCH resource. For example, if the first apparatus receives the first signal corresponding to the PDCCH resource, the quantity of blind detections corresponding to the PDCCH resource is 3, the quantity of remaining blind detections is 2, the quantity of non-overlapping CCEs corresponding to the PDCCH resource is 3, and the quantity of remaining non-overlapping CCEs is 2, the first apparatus may skip receiving the PDCCH corresponding to the PDCCH resource. This example can ensure that a quantity of blind detections performed by the first apparatus in one slot in one cell or one BWP does not exceed a maximum quantity of blind

detections specified in a protocol, and a quantity of non-overlapping CCEs involved in a blind detection performed by the first apparatus does not exceed a maximum quantity of non-overlapping CCEs specified in the protocol.

In some examples, the second condition includes the condition b1, the condition b4, or the condition b5. In other words, if the first apparatus does not receive the first signal corresponding to the PDCCH resource, the quantity of blind detections corresponding to the PDCCH resource is greater than the quantity of remaining blind detections, or the quantity of non-overlapping CCEs corresponding to the PDCCH resource is greater than the quantity of remaining non-overlapping CCEs, the first apparatus may skip receiving the PDCCH corresponding to the PDCCH resource. In this example, when the first apparatus does not receive the first signal associated with the PDCCH resource, the first apparatus may skip receiving the PDCCH corresponding to the PDCCH resource. In this way, the first apparatus can be prevented from performing a blind detection on a PDCCH resource without a PDCCH, so that complexity of receiving the PDCCH by the first apparatus is reduced, and energy consumption of the first apparatus is reduced. In addition, this example can ensure that a quantity of blind detections performed by the first apparatus in one slot in one cell or one BWP does not exceed a maximum quantity of blind detections specified in a protocol, and a quantity of non-overlapping CCEs involved in a blind detection performed by the first apparatus does not exceed a maximum quantity of non-overlapping CCEs specified in the protocol.

Optionally, in the manner b2, the method shown in FIG. 4 may further include S405.

**S405:** If the second condition is satisfied, the first apparatus may perform at least one of the following operations: Operation 1: Keep the quantity of remaining blind detections unchanged; in other words, do not subtract (or skip subtracting) the quantity of blind detections corresponding to the PDCCH resource from the quantity of remaining blind detections, or do not allocate (or skip allocating) the quantity of blind detections to the PDCCH resource. Operation 2: Keep the quantity of remaining non-overlapping CCEs unchanged; in other words, do not subtract (or skip subtracting) the quantity of non-overlapping CCEs corresponding to the PDCCH resource from the quantity of remaining non-overlapping CCEs, or do not allocate (or skip allocating) the quantity of non-overlapping CCEs to the PDCCH resource.

S405 is described below by using examples with reference to the second condition.

In some examples, the second condition may include the condition b1. In other words, if the first apparatus does not receive the first signal corresponding to the PDCCH resource, the first apparatus may keep the quantity of remaining blind detections unchanged, and/or keep the quantity of remaining non-overlapping CCEs unchanged. In this example, if the first apparatus does not receive the first signal corresponding to the PDCCH resource, the first apparatus may skip allocating the quantity of blind detections and/or the quantity of non-overlapping CCEs to the PDCCH resource. In this way, the first apparatus can be prevented from performing a blind detection on a PDCCH resource without a PDCCH, so that complexity of receiving the PDCCH by the first apparatus is reduced, and energy consumption of the first apparatus is reduced.

In some other examples, the second condition may include the condition b2. In other words, if the first apparatus receives the first signal corresponding to the PDCCH resource, and the quantity of blind detections corresponding to the PDCCH resource is greater than the quantity of remaining blind detections, the first apparatus may keep the quantity of remaining blind detections unchanged, and/or keep the quantity of remaining non-overlapping CCEs unchanged. For example, if the first apparatus receives the first signal corresponding to the PDCCH resource, the quantity of blind detections corresponding to the PDCCH resource is 3, and the quantity of remaining blind detections is 2, the first apparatus may keep the quantity of remaining blind detections unchanged, and/or keep the quantity of remaining non-overlapping CCEs unchanged. This example can ensure that a quantity of blind detections performed by the first apparatus in one slot in one cell or one BWP does not exceed a maximum quantity of blind detections specified in a protocol.

In some still other examples, the second condition may include the condition b3. In other words, if the first apparatus receives the first signal corresponding to the PDCCH resource, and the quantity of non-overlapping CCEs corresponding to the PDCCH resource is greater than the quantity of remaining non-overlapping CCEs, the first apparatus may keep the quantity of remaining blind detections unchanged, and/or keep the quantity of remaining non-overlapping CCEs unchanged. For example, if the first apparatus receives the first signal corresponding to the PDCCH resource, the quantity of non-overlapping CCEs corresponding to the PDCCH resource is 3, and the quantity of remaining non-overlapping CCEs is 2, the first apparatus may keep the quantity of remaining blind detections unchanged, and/or keep the quantity of remaining non-overlapping CCEs unchanged. This example can ensure that a quantity of non-overlapping CCEs involved in a blind detection performed by the first apparatus does not exceed a maximum quantity of non-overlapping CCEs specified in a protocol.

In some still other examples, the second condition may include the condition b2 and the condition b3. In other words, if the first apparatus receives the first signal corresponding to the PDCCH resource, the quantity of blind detections corresponding to the PDCCH resource is greater than the quantity of remaining blind detections, and the quantity of non-overlapping CCEs corresponding to the PDCCH resource is greater than the quantity of remaining non-overlapping CCEs, the first apparatus may keep the quantity of remaining blind detections unchanged, and/or keep the quantity of remaining non-overlapping CCEs unchanged. For example, if the first apparatus receives the first signal corresponding to the

PDCCH resource, the quantity of blind detections corresponding to the PDCCH resource is 3, the quantity of remaining blind detections is 2, the quantity of non-overlapping CCEs corresponding to the PDCCH resource is 3, and the quantity of remaining non-overlapping CCEs is 2, the first apparatus may keep the quantity of remaining blind detections unchanged, and/or keep the quantity of remaining non-overlapping CCEs unchanged. This example can ensure that a quantity of blind detections performed by the first apparatus in one slot in one cell or one BWP does not exceed a maximum quantity of blind detections specified in a protocol, and a quantity of non-overlapping CCEs involved in a blind detection performed by the first apparatus does not exceed a maximum quantity of non-overlapping CCEs specified in the protocol.

It should be understood that the method shown in FIG. 4 is applicable to a case of one or more PDCCH resources. A case in which the method is applicable to a plurality of PDCCH resources is described below.

In S401, the configuration message may include information about the plurality of PDCCH resources. The plurality of PDCCH resources may include at least one of the following: a plurality of control resource sets, a plurality of search spaces, a plurality of monitoring occasions, or a plurality of PDCCH candidates. Any one of the plurality of PDCCH resources may be the PDCCH resource in S401. For content of each of the plurality of PDCCH resources, refer to the descriptions of the PDCCH resource in S401. Details are not described herein again.

In S402, the second apparatus may determine, depending on whether a PDCCH corresponding to each PDCCH of the plurality of PDCCH resources is sent, whether to send a first signal associated with each PDCCH resource.

In S403, the first apparatus may determine, based on an order of the plurality of PDCCH resources and depending on whether the first signal associated with each of the plurality of PDCCH resources is received, whether to receive the PDCCH corresponding to each PDCCH resource.

Each of the plurality of PDCCH resources may be associated with one first signal, and the first signal may be used to determine whether a PDCCH corresponding to the PDCCH resource associated with the first signal is sent. In this way, for each of the plurality of PDCCH resources, both the first apparatus and the second apparatus may perform processing according to the method shown in FIG. 4. Details are not described again.

Optionally, for a 1st PDCCH resource in the plurality of PDCCH resources, a quantity of remaining blind detections may be a maximum quantity of blind detections specified (or supported) in a protocol or a standard, and/or a quantity of remaining non-overlapping CCEs may be a maximum quantity of non-overlapping CCEs specified (or supported) in the protocol or the standard. For example, the maximum quantity of blind detections specified in the protocol is 4, and the maximum quantity of non-overlapping CCEs is 8. If the plurality of PDCCH resources are four search spaces (namely, an SS 1, an SS 2, an SS 3, and an SS 4), and an order of the four search spaces is the SS 4, the SS 1, the SS 2, and the SS 3, a quantity of remaining blind detections is 4 and a quantity of remaining non-overlapping CCEs is 8 for the SS 4.

There may be a plurality of implementations of the order of the plurality of PDCCH resources, for example, at least one of a manner c1 to a manner c4.

**Manner c1:** The order of the plurality of PDCCH resources is an order of the plurality of control resource sets. In other words, the plurality of PDCCH resources are the plurality of control resource sets. The order of the plurality of control resource sets may be determined based on at least one of the following: an order of indexes of the plurality of control resource sets, an order of reference time points of search spaces corresponding to the plurality of control resource sets, an order of reference time points of first signals associated with the plurality of control resource sets, or a preset order.

The reference time point of the search space may be a start time point of the search space (for example, a 1st time domain symbol corresponding to the search space), may be an end time point of the search space, or may be a time point in the middle of the search space. If one control resource set corresponds to a plurality of search spaces, a reference time point of the search space corresponding to the control resource set may be a reference time point of a search space that is with an earliest reference time point and that corresponds to the control resource set, or may be a reference time point of a search space that is with a latest reference time point and that corresponds to the control resource set.

The reference time point of the first signal may be a receiving time point of the first signal, or may be a sending time point of the first signal.

Optionally, the order of the plurality of control resource sets satisfies at least one of the following A1 to A7:

A1: The plurality of control resource sets may be sorted in ascending order of the indexes of the control resource sets. For example, if the plurality of control resource sets include a CORESET 1 to a CORESET 3, and an ascending order of indexes of the CORESET 1 to the CORESET 3 is the CORESET 1, the CORESET 2, and the CORESET 3, the order of the plurality of control resource sets may be the CORESET 1, the CORESET 2, and the CORESET 3.

A2: The plurality of control resource sets may be sorted in descending order of the indexes of the control resource sets. For example, if the plurality of control resource sets include a CORESET 1 to a CORESET 3, and an ascending order of indexes of the CORESET 1 to the CORESET 3 is the CORESET 1, the CORESET 2, and the CORESET 3, the order of the plurality of control resource sets may be the CORESET 3, the CORESET 2, and the CORESET 1.

A3: The plurality of control resource sets may be sorted in an earliest-to-latest order of the reference time points of the search spaces corresponding to the control resource sets. For example, the plurality of control resource sets include a CORESET 1 to a CORESET 3. The CORESET 1 to the CORESET 3 respectively correspond to search spaces SS 1 to

SS 3. If an earliest-to-latest order of reference time points of the SS 1 to the SS 3 is the SS 1, the SS 2, and the SS 3, the order of the plurality of control resource sets may be the CORESET 1, the CORESET 2, and the CORESET 3. In this manner, an earlier reference time point of a corresponding search space indicates a higher rank of a control resource set. In this way, when receiving PDCCHs based on the order, the first apparatus may preferentially allocate a quantity of blind detections and a quantity of non-overlapping CCEs to a control resource set corresponding to a search space with an earlier reference time point, so that the first apparatus may preferentially receive a PDCCH corresponding to the control resource set corresponding to the search space with the earlier reference time point.

A4: The plurality of control resource sets may be sorted in a latest-to-earliest order of the reference time points of the search spaces corresponding to the control resource sets. For example, the plurality of control resource sets include a CORESET 1 to a CORESET 3. The CORESET 1 to the CORESET 3 respectively correspond to search spaces SS 1 to SS 3. If an earliest-to-latest order of reference time points of the SS 1 to the SS 3 is the SS 1, the SS 2, and the SS 3, the order of the plurality of control resource sets may be the CORESET 3, the CORESET 2, and the CORESET 1.

In A3 or A4, the order of the plurality of control resource sets is determined based on the order of the reference time points of the search spaces corresponding to the plurality of control resource sets. Optionally, if reference time points of search spaces corresponding to at least two control resource sets in the plurality of control resource sets are the same, an order of the at least two control resource sets may be determined based on an order of indexes of the at least two control resource sets. For example, in A3 or A4, if reference time points of search spaces corresponding to N control resource sets in the plurality of control resource sets are the same, and N is an integer greater than or equal to 2, the N control resource sets may be sorted in ascending order of indexes of the control resource sets; or the N control resource sets may be sorted in descending order of indexes of the control resource sets. In this way, the first apparatus can quickly and accurately determine the order of the plurality of control resource sets.

For example, the plurality of control resource sets are sorted in the earliest-to-latest order of the reference time points of the search spaces corresponding to the control resource sets. The plurality of control resource sets include a CORESET 1 to a CORESET 3. The CORESET 1 to the CORESET 3 respectively correspond to search spaces SS 1 to SS 3. Reference time points of the SS 1 and the SS 2 are the same, and the reference time point of the SS 1 is earlier than a reference time point of the SS 3. If the CORESET 1 and the CORESET 2 are sorted in ascending order of indexes of the control resource sets, and the index of the CORESET 1 is smaller than the index of the CORESET 2, the order of the plurality of control resource sets may be the CORESET 1, the CORESET 2, and the CORESET 3. Alternatively, if the CORESET 1 and the CORESET 2 are sorted in descending order of indexes of the control resource sets, and the index of the CORESET 1 is smaller than the index of the CORESET 2, the order of the plurality of control resource sets may be the CORESET 2, the CORESET 1, and the CORESET 3.

For another example, the plurality of control resource sets are sorted in the latest-to-earliest order of reference time points of the search spaces corresponding to the control resource sets. The plurality of control resource sets include a CORESET 1 to a CORESET 3. The CORESET 1 to the CORESET 3 respectively correspond to search spaces SS 1 to SS 3. Reference time points of the SS 1 and the SS 2 are the same, and the reference time point of the SS 1 is earlier than a reference time point of the SS 3. If the CORESET 1 and the CORESET 2 are sorted in ascending order of indexes of the control resource sets, and the index of the CORESET 1 is smaller than the index of the CORESET 2, the order of the plurality of control resource sets may be the CORESET 3, the CORESET 1, and the CORESET 2. Alternatively, if the CORESET 1 and the CORESET 2 are sorted in descending order of indexes of the control resource sets, and the index of the CORESET 1 is smaller than the index of the CORESET 2, the order of the plurality of control resource sets may be the CORESET 3, the CORESET 2, and the CORESET 1.

A5: The plurality of control resource sets may be sorted in an earliest-to-latest order of the reference time points of the first signals associated with the control resource sets. For example, the plurality of control resource sets include a CORESET 1 to a CORESET 3. The CORESET 1 to the CORESET 3 respectively correspond to first signals CDS 1 to CDS 3. If an earliest-to-latest order of reference time points of the CDS 1 to the CDS 3 is the CDS 1, the CDS 2, and the CDS 3, the order of the plurality of control resource sets may be the CORESET 1, the CORESET 2, and the CORESET 3. In this manner, an earlier reference time point of a corresponding first signal indicates a higher rank of a control resource set. In this way, when receiving PDCCHs based on the order, the first apparatus may preferentially allocate a quantity of blind detections and a quantity of non-overlapping CCEs to a control resource set associated with a first signal with an earlier reference time point, so that the first apparatus may preferentially receive a PDCCH corresponding to the control resource set associated with the first signal with the earlier reference time point.

A6: The plurality of control resource sets may be sorted in a latest-to-earliest order of the reference time points of the first signals associated with the control resource sets. For example, the plurality of control resource sets include a CORESET 1 to a CORESET 3. The CORESET 1 to the CORESET 3 respectively correspond to first signals CDS 1 to CDS 3. If an earliest-to-latest order of reference time points of the CDS 1 to the CDS 3 is the CDS 1, the CDS 2, and the CDS 3, the order of the plurality of control resource sets may be the CORESET 3, the CORESET 2, and the CORESET 1.

In A5 or A6, the order of the plurality of control resource sets is determined based on the order of the reference

time points of the first signals associated with the plurality of control resource sets. Optionally, if reference time points of first signals associated with at least two control resource sets in the plurality of control resource sets are the same, an order of the at least two control resource sets may be determined based on an order of indexes of the at least two control resource sets. For example, in A5 or A6, if reference time points of first signals associated with P control resource sets in the plurality of control resource sets are the same, and P is an integer greater than or equal to 2, the P control resource sets may be sorted in ascending order of indexes of the control resource sets; or the P control resource sets may be sorted in descending order of indexes of the control resource sets. In this way, the first apparatus can quickly and accurately determine the order of the plurality of control resource sets.

For example, the plurality of control resource sets are sorted in the earliest-to-latest order of the reference time points of the first signals associated with the control resource sets. The plurality of control resource sets include a CORESET 1 to a CORESET 3. The CORESET 1 to the CORESET 3 respectively correspond to first signals CDS 1 to CDS 3. Reference time points of the CDS 1 and the CDS 2 are the same, and the reference time point of the CDS 1 is earlier than a reference time point of the CDS 3. If the CORESET 1 and the CORESET 2 are sorted in ascending order of indexes of the control resource sets, and the index of the CORESET 1 is smaller than the index of the CORESET 2, the order of the plurality of control resource sets may be the CORESET 1, the CORESET 2, and the CORESET 3. If the CORESET 1 and the CORESET 2 are sorted in descending order of indexes of the control resource sets, and the index of the CORESET 1 is smaller than the index of the CORESET 2, the order of the plurality of control resource sets may be the CORESET 2, the CORESET 1, and the CORESET 3.

For another example, the plurality of control resource sets are sorted in the latest-to-earliest order of the reference time points of the first signals associated with the control resource sets. The plurality of control resource sets include a CORESET 1 to a CORESET 3. The CORESET 1 to the CORESET 3 respectively correspond to first signals CDS 1 to CDS 3. Reference time points of the CDS 1 and the CDS 2 are the same, and the reference time point of the CDS 1 is earlier than a reference time point of the CDS 3. If the CORESET 1 and the CORESET 2 are sorted in ascending order of indexes of the control resource sets, and the index of the CORESET 1 is smaller than the index of the CORESET 2, the order of the plurality of control resource sets may be the CORESET 3, the CORESET 1, and the CORESET 2. If the CORESET 1 and the CORESET 2 are sorted in descending order of indexes of the control resource sets, and the index of the CORESET 1 is smaller than the index of the CORESET 2, the order of the plurality of control resource sets may be the CORESET 3, the CORESET 2, and the CORESET 1.

A7: M control resource sets in the plurality of control resource sets are ranked first, and M is a positive integer. The M control resource sets may be preset, for example, specified in a protocol. For example, the M control resource sets may include a control resource set corresponding to a CSS.

Optionally, control resource sets other than the M control resource sets in the plurality of control resource sets may be sorted in any manner of A1 to A6. For example, the plurality of control resource sets include a CORESET 1 to a CORESET 4. If the CORESET 4 corresponds to a CSS, the CORESET 4 is ranked first in the plurality of control resource sets, and the CORESET 1 to the CORESET 3 may be sorted in any manner of A1 to A6.

For example, the control resource sets other than the M control resource sets in the plurality of control resource sets may include a control resource set corresponding to a USS.

In the manner c1, the first apparatus can quickly and accurately determine the order of the plurality of control resource sets.

**Manner c2:** The order of the plurality of PDCCH resources is an order of the plurality of search spaces. In other words, the plurality of PDCCH resources are the plurality of search spaces. The order of the plurality of search spaces may be determined based on at least one of the following: an order of indexes of the plurality of search spaces, an order of reference time points of the plurality of search spaces, an order of reference time points of first signals associated with the plurality of search spaces, an order of indexes of control resource sets corresponding to the plurality of search spaces, or a preset order. For specific content of the reference time point of the search space, refer to the descriptions of the reference time point of the search space in the manner c1. For specific content of the reference time point of the first signal, refer to the descriptions of the reference time point of the first signal in the manner c1. Details are not described herein again.

Optionally, the order of the plurality of search spaces satisfies at least one of the following B1 to B7:

B1: The plurality of search spaces may be sorted in ascending order of the indexes of the search spaces. For example, if the plurality of search spaces include an SS 1 to an SS 3, and an ascending order of indexes of the SS 1 to the SS 3 is the SS 1, the SS 2, and the SS 3, the order of the plurality of search spaces may be the SS 1, the SS 2, and the SS 3.

B2: The plurality of search spaces may be sorted in descending order of the indexes of the search spaces. For example, if the plurality of search spaces include an SS 1 to an SS 3, and an ascending order of indexes of the SS 1 to the SS 3 are the SS 1, the SS 2, and the SS 3, the order of the plurality of search spaces may be the SS 3, the SS 2, and the SS 1.

B3: The plurality of search spaces may be sorted in an earliest-to-latest order of the reference time points of the search spaces. For example, the plurality of search spaces include an SS 1 to an SS 3. If an earliest-to-latest order of

reference time points of the SS 1 to the SS 3 is the SS 1, the SS 2, and the SS 3, the order of the plurality of search spaces may be the SS 1, the SS 2, and the SS 3. In this manner, an earlier reference time point of a search space indicates a higher rank of the search space. In this way, when receiving PDCCHs based on the order, the first apparatus may preferentially allocate a quantity of blind detections and a quantity of non-overlapping CCEs to a search space with an earlier reference time point, so that the first apparatus may preferentially receive a PDCCH corresponding to the search space with the earlier reference time point.

B4: The plurality of search spaces may be sorted in a latest-to-earliest order of the reference time points of the search spaces. For example, the plurality of search spaces include an SS 1 to an SS 3. If an earliest-to-latest order of reference time points of the SS 1 to the SS 3 is the SS 1, the SS 2, and the SS 3, the order of the plurality of search spaces may be the SS 3, the SS 2, and the SS 1.

In B3 or B4, the order of the plurality of search spaces is determined based on the order of the reference time points of the search spaces. Optionally, if reference time points of at least two search spaces in the plurality of search spaces are the same, an order of the at least two search spaces may be determined based on an order of indexes of the at least two search spaces, or an order of the at least two search spaces may be determined based on an order of indexes of control resource sets corresponding to the at least two search spaces. For example, in B3 or B4, if reference time points of R search spaces in the plurality of search spaces are the same, and R is an integer greater than or equal to 2, the R search spaces may be sorted in ascending order of indexes of the search spaces; the R search spaces may be sorted in descending order of indexes of the search spaces; the R search spaces may be sorted in ascending order of indexes of control resource sets corresponding to the search spaces; or the R search spaces may be sorted in descending order of indexes of control resource sets corresponding to the search spaces. In this way, the first apparatus can quickly and accurately determine the order of the plurality of search spaces.

For example, the plurality of search spaces are sorted in the earliest-to-latest order of the reference time points of the search spaces. The plurality of search spaces include an SS 1 to an SS 3. Reference time points of the SS 1 and the SS 2 are the same, and the reference time point of the SS 1 is earlier than a reference time point of the SS 3. If the SS 1 and the SS 2 are sorted in ascending order of indexes of the search spaces, and the index of the SS 1 is smaller than the index of the SS 2, the order of the plurality of search spaces may be the SS 1, the SS 2, and the SS 3. Alternatively, if the SS 1 and the SS 2 are sorted in descending order of indexes of the search spaces, and the index of the SS 1 is smaller than the index of the SS 2, the order of the plurality of search spaces may be the SS 2, the SS 1, and the SS 3. Alternatively, if the SS 1 and the SS 2 are sorted in ascending order of indexes of control resource sets corresponding to the search spaces, and the index of the control resource set corresponding to the SS 1 is smaller than the index of the control resource set corresponding to the SS 2, the order of the plurality of search spaces may be the SS 1, the SS 2, and the SS 3. Alternatively, if the SS 1 and the SS 2 are sorted in descending order of indexes of control resource sets corresponding to the search spaces, and the index of the control resource set corresponding to the SS 1 is smaller than the index of the control resource set corresponding to the SS 2, the order of the plurality of search spaces may be the SS 2, the SS 1, and the SS 3.

For another example, the plurality of search spaces are sorted in the latest-to-earliest order of the reference time points of the search spaces. The plurality of search spaces include an SS 1 to an SS 3. Reference time points of the SS 1 and the SS 2 are the same, and the reference time point of the SS 1 is earlier than a reference time point of the SS 3. If the SS 1 and the SS 2 are sorted in ascending order of indexes of the search spaces, and the index of the SS 1 is smaller than the index of the SS 2, the order of the plurality of search spaces may be the SS 3, the SS 1, and the SS 2. Alternatively, if the SS 1 and the SS 2 are sorted in descending order of indexes of the search spaces, and the index of the SS 1 is smaller than the index of the SS 2, the order of the plurality of search spaces may be the SS 3, the SS 2, and the SS 1. Alternatively, if the SS 1 and the SS 2 are sorted in ascending order of indexes of control resource sets corresponding to the search spaces, and the index of the control resource set corresponding to the SS 1 is smaller than the index of the control resource set corresponding to the SS 2, the order of the plurality of search spaces may be the SS 3, the SS 1, and the SS 2. Alternatively, if the SS 1 and the SS 2 are sorted in descending order of indexes of control resource sets corresponding to the search spaces, and the index of the control resource set corresponding to the SS 1 is smaller than the index of the control resource set corresponding to the SS 2, the order of the plurality of search spaces may be the SS 3, the SS 2, and the SS 1.

B5: The plurality of search spaces may be sorted in an earliest-to-latest order of the reference time points of the first signals associated with the search spaces. For example, the plurality of search spaces include an SS 1 to an SS 3. The SS 1 to the SS 3 respectively correspond to first signals CDS 1 to CDS 3. If an earliest-to-latest order of reference time points of the CDS 1 to the CDS 3 is the CDS 1, the CDS 2, and the CDS 3, the order of the plurality of search spaces may be the SS 1, the SS 2, and the SS 3. In this manner, an earlier reference time point of a corresponding first signal indicates a higher rank of a search space. In this way, when receiving PDCCHs based on the order, the first apparatus may preferentially allocate a quantity of blind detections and a quantity of non-overlapping CCEs to a search space associated with a first signal with an earlier reference time point, so that the first apparatus may preferentially receive a PDCCH corresponding to the search space associated with the first signal with the earlier reference time point.

B6: The plurality of search spaces may be sorted in a latest-to-earliest order of the reference time points of the first

signals associated with the search spaces. For example, the plurality of search spaces include an SS 1 to an SS 3. The SS 1 to the SS 3 respectively correspond to first signals CDS 1 to CDS 3. If an earliest-to-latest order of reference time points of the CDS 1 to the CDS 3 is the CDS 1, the CDS 2, and the CDS 3, the order of the plurality of search spaces may be the SS 3, the SS 2, and the SS 1.

In B5 or B6, the order of the plurality of search spaces is determined based on the order of the reference time points of the first signals associated with the plurality of search spaces. Optionally, if reference time points of first signals associated with at least two search spaces in the plurality of search spaces are the same, an order of the at least two search spaces may be determined based on an order of indexes of the at least two search spaces, or an order of the at least two search spaces may be determined based on an order of indexes of control resource sets corresponding to the at least two search spaces. For example, in B5 or B6, if reference time points of first signals associated with S search spaces in the plurality of search spaces are the same, and S is an integer greater than or equal to 2, the S search spaces may be sorted in ascending order of indexes of the search spaces; the S search spaces may be sorted in descending order of indexes of the search spaces; the S search spaces may be sorted in ascending order of indexes of control resource sets corresponding to the search spaces; or the S search spaces may be sorted in descending order of indexes of control resource sets corresponding to the search spaces. In this way, the first apparatus can quickly and accurately determine the order of the plurality of search spaces.

For example, the plurality of search spaces are sorted in the earliest-to-latest order of the reference time points of the first signals associated with the search spaces. The plurality of search spaces include an SS 1 to an SS 3. The SS 1 to the SS 3 respectively correspond to first signals CDS 1 to CDS 3. Reference time points of the CDS 1 and the CDS 2 are the same, and the reference time point of the CDS 1 is earlier than a reference time point of the CDS 3. If the SS 1 and the SS 2 are sorted in ascending order of indexes of the search spaces, and the index of the SS 1 is smaller than the index of the SS 2, the order of the plurality of search spaces may be the SS 1, the SS 2, and the SS 3. Alternatively, if the SS 1 and the SS 2 are sorted in descending order of indexes of the search spaces, and the index of the SS 1 is smaller than the index of the SS 2, the order of the plurality of search spaces may be the SS 2, the SS 1, and the SS 3. Alternatively, if the SS 1 and the SS 2 are sorted in ascending order of indexes of control resource sets corresponding to the search spaces, and the index of the control resource set corresponding to the SS 1 is smaller than the index of the control resource set corresponding to the SS 2, the order of the plurality of search spaces may be the SS 1, the SS 2, and the SS 3. Alternatively, if the SS 1 and the SS 2 are sorted in descending order of indexes of control resource sets corresponding to the search spaces, and the index of the control resource set corresponding to the SS 1 is smaller than the index of the control resource set corresponding to the SS 2, the order of the plurality of search spaces may be the SS 2, the SS 1, and the SS 3.

For another example, the plurality of search spaces are sorted in the latest-to-earliest order of the reference time points of the first signals associated with the search spaces. The plurality of search spaces include an SS 1 to an SS 3. The SS 1 to the SS 3 respectively correspond to first signals CDS 1 to CDS 3. Reference time points of the CDS 1 and the CDS 2 are the same, and the reference time point of the CDS 1 is earlier than a reference time point of the CDS 3. If the SS 1 and the SS 2 are sorted in ascending order of indexes of the search spaces, and the index of the SS 1 is smaller than the index of the SS 2, the order of the plurality of search spaces may be the SS 3, the SS 1, and the SS 2. Alternatively, if the SS 1 and the SS 2 are sorted in descending order of indexes of the search spaces, and the index of the SS 1 is smaller than the index of the SS 2, the order of the plurality of search spaces is the SS 3, the SS 2, and the SS 1. Alternatively, if the SS 1 and the SS 2 are sorted in ascending order of indexes of control resource sets corresponding to the search spaces, and the index of the control resource set corresponding to the SS 1 is smaller than the index of the control resource set corresponding to the SS 2, the order of the plurality of search spaces may be the SS 3, the SS 1, and the SS 2. Alternatively, if the SS 1 and the SS 2 are sorted in descending order of indexes of control resource sets corresponding to the search spaces, and the index of the control resource set corresponding to the SS 1 is smaller than the index of the control resource set corresponding to the SS 2, the order of the plurality of search spaces may be the SS 3, the SS 2, and the SS 1.

B7: Q search spaces in the plurality of search spaces are ranked first, and Q is a positive integer. The Q search spaces may be preset, for example, specified in a protocol. For example, the Q search spaces may include a CSS.

Optionally, search spaces other than the Q search spaces in the plurality of search spaces may be sorted in any manner of B1 to B6. For example, the plurality of search spaces include an SS 1 to an SS 4. If the SS 4 is a CSS, the SS 4 is ranked first in the plurality of search spaces, and the SS 1 to the SS 3 may be sorted in any manner of B1 to B6.

For example, the search spaces other than the Q search spaces in the plurality of search spaces may include a USS.

In the manner c2, the first apparatus can quickly and accurately determine the order of the plurality of search spaces.

**Manner c3:** The order of the plurality of PDCCH resources is an order of the plurality of monitoring occasions. In other words, the plurality of PDCCH resources are the plurality of monitoring occasions. The order of the plurality of monitoring occasions may be determined based on at least one of the following: an order of reference time points of the plurality of monitoring occasions, an order of reference time points of first signals associated with the plurality of monitoring occasions, an order of indexes of control resource sets corresponding to the plurality of monitoring occasions, an order of

indexes of search sets corresponding to the plurality of monitoring occasions, or a preset order. The reference time point of the monitoring occasion may be a start time point of the monitoring occasion (for example, a 1st time domain symbol corresponding to the monitoring occasion), may be an end time point of the monitoring occasion, or may be a time point in the middle of the monitoring occasion. For specific content of the reference time point of the first signal, refer to the descriptions of the reference time point of the first signal in the manner c1. Details are not described herein again.

Optionally, the order of the plurality of monitoring occasions satisfies at least one of the following C1 to C7:

C1: The plurality of monitoring occasions may be sorted in an earliest-to-latest order of the reference time points of the monitoring occasions. For example, the plurality of monitoring occasions include an MO 1 to an MO 3. If an earliest-to-latest order of reference time points of the MO 1 to the MO 3 is the MO 1, the MO 2, and the MO 3, the order of the plurality of monitoring occasions may be the MO 1, the MO 2, and the MO 3. In this manner, an earlier reference time point of a monitoring occasion indicates a higher rank of the monitoring occasion. In this way, when receiving PDCCHs based on the order, the first apparatus may preferentially allocate a quantity of blind detections and a quantity of non-overlapping CCEs to a monitoring occasion with an earlier reference time point, so that the first apparatus may preferentially receive a PDCCH corresponding to the monitoring occasion with the earlier reference time point.

C2: The plurality of monitoring occasions may be sorted in a latest-to-earliest order of the reference time points of the monitoring occasions. For example, the plurality of monitoring occasions include an MO 1 to an MO 3. If an earliest-to-latest order of reference time points of the MO 1 to the MO 3 is the MO 1, the MO 2, and the MO 3, the order of the plurality of monitoring occasions may be the MO 3, the MO 2, and the MO 1.

In C1 or C2, the order of the plurality of monitoring occasions is determined based on the order of the reference time points of the plurality of monitoring occasions. Optionally, if reference time points of at least two monitoring occasions in the plurality of monitoring occasions are the same, an order of the at least two monitoring occasions may be determined based on an order of indexes of search spaces corresponding to the at least two monitoring occasions, or an order of the at least two monitoring occasions may be determined based on an order of indexes of control resource sets corresponding to the at least two monitoring occasions. For example, in C1 or C2, if reference time points of U monitoring occasions in the plurality of monitoring occasions are the same, and U is an integer greater than or equal to 2, the U monitoring occasions may be sorted in ascending order of indexes of search spaces corresponding to the monitoring occasions; the U monitoring occasions may be sorted in descending order of indexes of search spaces corresponding to the monitoring occasions; the U monitoring occasions may be sorted in ascending order of indexes of control resource sets corresponding to the monitoring occasions; or the U monitoring occasions may be sorted in descending order of indexes of control resource sets corresponding to the monitoring occasions. In this way, the first apparatus can quickly and accurately determine the order of the plurality of monitoring occasions.

For example, the plurality of monitoring occasions are sorted in the earliest-to-latest order of the reference time points of the monitoring occasions. The plurality of monitoring occasions include an MO 1 to an MO 3. Reference time points of the MO 1 and the MO 2 are the same. The reference time point of the MO 1 is earlier than a reference time point of the MO 3. If the MO 1 and the MO 2 are sorted in ascending order of indexes of search spaces corresponding to the monitoring occasions, and the index of the search space corresponding to the MO 1 is smaller than the index of the search space corresponding to the MO 2, the order of the plurality of monitoring occasions may be the MO 1, the MO 2, and the MO 3. Alternatively, if the MO 1 and the MO 2 are sorted in descending order of indexes of search spaces corresponding to the monitoring occasions, and the index of the search space corresponding to the MO 1 is smaller than the index of the search space corresponding to the MO 2, the order of the plurality of monitoring occasions may be the MO 2, the MO 1, and the MO 3. Alternatively, if the MO 1 and the MO 2 are sorted in ascending order of indexes of control resource sets corresponding to the monitoring occasions, and the index of the control resource set corresponding to the MO 1 is smaller than the index of the control resource set corresponding to the MO 2, the order of the plurality of monitoring occasions may be the MO 1, the MO 2, and the MO 3. Alternatively, if the MO 1 and the MO 2 are sorted in descending order of indexes of control resource sets corresponding to the monitoring occasions, and the index of the control resource set corresponding to the MO 1 is smaller than the index of the control resource set corresponding to the MO 2, the order of the plurality of monitoring occasions may be the MO 2, the MO 1, and the MO 3.

For another example, the plurality of monitoring occasions are sorted in the latest-to-earliest order of the reference time points of the monitoring occasions. The plurality of monitoring occasions include an MO 1 to an MO 3. Reference time points of the MO 1 and the MO 2 are the same. The reference time point of the MO 1 is earlier than a reference time point of the MO 3. If the MO 1 and the MO 2 are sorted in ascending order of indexes of search spaces corresponding to the monitoring occasions, and the index of the search space corresponding to the MO 1 is smaller than the index of the search space corresponding to the MO 2, the order of the plurality of monitoring occasions may be the MO 3, the MO 1, and the MO 2. Alternatively, if the MO 1 and the MO 2 are sorted in descending order of indexes of search spaces corresponding to the monitoring occasions, and the index of the search space corresponding to the MO 1 is smaller than the index of the search space corresponding to the MO 2, the order of the plurality of monitoring occasions may be the

MO 3, the MO 2, and the MO 1. Alternatively, if the MO 1 and the MO 2 are sorted in ascending order of indexes of control resource sets corresponding to the monitoring occasions, and the index of the control resource set corresponding to the MO 1 is smaller than the index of the control resource set corresponding to the MO 2, the order of the plurality of monitoring occasions may be the MO 3, the MO 1, and the MO 2. Alternatively, if the MO 1 and the MO 2 are sorted in descending order of indexes of control resource sets corresponding to the monitoring occasions, and the index of the control resource set corresponding to the MO 1 is smaller than the index of the control resource set corresponding to the MO 2, the order of the plurality of monitoring occasions may be the MO 3, the MO 2, and the MO 1.

C3: The plurality of monitoring occasions may be sorted in an earliest-to-latest order of the reference time points of the first signals associated with the monitoring occasions. For example, the plurality of monitoring occasions include an MO 1 to an MO 3. The MO 1 to the MO 3 respectively correspond to first signals CDS 1 to CDS 3. If an earliest-to-latest order of reference time points of the CDS 1 to the CDS 3 is the CDS 1, the CDS 2, and the CDS 3, the order of the plurality of monitoring occasions may be the MO 1, the MO 2, and the MO 3. In this manner, an earlier reference time point of a corresponding first signal indicates a higher rank of a monitoring occasion. In this way, when receiving PDCCHs based on the order, the first apparatus may preferentially allocate a quantity of blind detections and a quantity of non-overlapping CCEs to a monitoring occasion associated with a first signal with an earlier reference time point, so that the first apparatus may preferentially receive a PDCCH corresponding to the monitoring occasion associated with the first signal with the earlier reference time point.

C4: The plurality of monitoring occasions may be sorted in a latest-to-earliest order of the reference time points of the first signals associated with the monitoring occasions. For example, the plurality of monitoring occasions include an MO 1 to an MO 3. The MO 1 to the MO 3 respectively correspond to first signals CDS 1 to CDS 3. If an earliest-to-latest order of reference time points of the CDS 1 to the CDS 3 is the CDS 1, the CDS 2, and the CDS 3, the order of the plurality of monitoring occasions may be the MO 3, the MO 2, and the MO 1.

In C3 or C4, the plurality of monitoring occasions are determined based on the order of the reference time points of the first signals associated with the monitoring occasions. Optionally, if reference time points of first signals associated with at least two monitoring occasions in the plurality of monitoring occasions are the same, an order of the at least two monitoring occasions may be determined based on an order of indexes of search spaces corresponding to the at least two monitoring occasions, or an order of the at least two monitoring occasions may be determined based on an order of indexes of control resource sets corresponding to the at least two monitoring occasions. For example, in C3 or C4, if reference time points of first signals associated with V monitoring occasions in the plurality of monitoring occasions are the same, and V is an integer greater than or equal to 2, the V monitoring occasions may be sorted in ascending order of indexes of search spaces corresponding to the monitoring occasions; the V monitoring occasions may be sorted in descending order of indexes of search spaces corresponding to the monitoring occasions; the V monitoring occasions may be sorted in ascending order of indexes of control resource sets corresponding to the monitoring occasions; or the V monitoring occasions may be sorted in descending order of indexes of control resource sets corresponding to the monitoring occasions. In this way, the first apparatus can quickly and accurately determine the order of the plurality of monitoring occasions.

For example, the plurality of monitoring occasions are sorted in the earliest-to-latest order of the reference time points of the first signals associated with the monitoring occasions. The plurality of monitoring occasions include an MO 1 to an MO 3. The MO 1 to the MO 3 respectively correspond to first signals CDS 1 to CDS 3. Reference time points of the CDS 1 and the CDS 2 are the same. The reference time point of the CDS 1 is earlier than a reference time point of the CDS 3. If the MO 1 and the MO 2 are sorted in ascending order of indexes of search spaces corresponding to the monitoring occasions, and the index of the search space corresponding to the MO 1 is smaller than the index of the search space corresponding to the MO 2, the order of the plurality of monitoring occasions may be the MO 1, the MO 2, and the MO 3. Alternatively, if the MO 1 and the MO 2 are sorted in descending order of indexes of search spaces corresponding to the monitoring occasions, and the index of the search space corresponding to the MO 1 is smaller than the index of the search space corresponding to the MO 2, the order of the plurality of monitoring occasions may be the MO 2, the MO 1, and the MO 3. Alternatively, if the MO 1 and the MO 2 are sorted in ascending order of indexes of control resource sets corresponding to the monitoring occasions, and the index of the control resource set corresponding to the MO 1 is smaller than the index of the control resource set corresponding to the MO 2, the order of the plurality of monitoring occasions may be the MO 1, the MO 2, and the MO 3. Alternatively, if the MO 1 and the MO 2 are sorted in descending order of indexes of control resource sets corresponding to the monitoring occasions, and the index of the control resource set corresponding to the MO 1 is smaller than the index of the control resource set corresponding to the MO 2, the order of the plurality of monitoring occasions may be the MO 2, the MO 1, and the MO 3.

For another example, the plurality of monitoring occasions are sorted in the latest-to-earliest order of the reference time points of the first signals associated with the monitoring occasions. The plurality of monitoring occasions include an MO 1 to an MO 3. The MO 1 to the MO 3 respectively correspond to first signals CDS 1 to CDS 3. Reference time points of the CDS 1 and the CDS 2 are the same. The reference time point of the CDS 1 is earlier than a reference time point of the CDS 3. If the MO 1 and the MO 2 are sorted in ascending order of indexes of search spaces corresponding to the

monitoring occasions, and the index of the search space corresponding to the MO 1 is smaller than the index of the search space corresponding to the MO 2, the order of the plurality of monitoring occasions may be the MO 3, the MO 1, and the MO 2. Alternatively, if the MO 1 and the MO 2 are sorted in descending order of indexes of search spaces corresponding to the monitoring occasions, and the index of the search space corresponding to the MO 1 is smaller than the index of the search space corresponding to the MO 2, the order of the plurality of monitoring occasions may be the MO 3, the MO 2, and the MO 1. Alternatively, if the MO 1 and the MO 2 are sorted in ascending order of indexes of control resource sets corresponding to the monitoring occasions, and the index of the control resource set corresponding to the MO 1 is smaller than the index of the control resource set corresponding to the MO 2, the order of the plurality of monitoring occasions may be the MO 3, the MO 1, and the MO 2. Alternatively, if the MO 1 and the MO 2 are sorted in descending order of indexes of control resource sets corresponding to the monitoring occasions, and the index of the control resource set corresponding to the MO 1 is smaller than the index of the control resource set corresponding to the MO 2, the order of the plurality of monitoring occasions may be the MO 3, the MO 2, and the MO 1.

C5: The plurality of monitoring occasions may be sorted in ascending order of the indexes of the search spaces corresponding to the monitoring occasions. For example, the plurality of monitoring occasions include an MO 1 to an MO 3. The MO 1 to the MO 3 respectively correspond to search spaces SS 1 to SS 3. If an ascending order of indexes of the SS 1 to the SS 3 is the SS 1, the SS 2, and the SS 3, the order of the plurality of monitoring occasions may be the MO 1, the MO 2, and the MO 3.

C6: The plurality of monitoring occasions may be sorted in descending order of the indexes of the search spaces corresponding to the monitoring occasions. For example, the plurality of monitoring occasions include an MO 1 to an MO 3. The MO 1 to the MO 3 respectively correspond to search spaces SS 1 to SS 3. If an ascending order of indexes of the SS 1 to the SS 3 is the SS 1, the SS 2, and the SS 3, the order of the plurality of monitoring occasions may be the MO 3, the MO 2, and the MO 1.

In C5 or C6, the plurality of monitoring occasions are determined based on the order of the indexes of the search spaces corresponding to the monitoring occasions. Optionally, if at least two monitoring occasions in the plurality of monitoring occasions correspond to a same search space, an order of the at least two monitoring occasions may be determined based on an order of reference time points of the at least two monitoring occasions, or an order of the at least two monitoring occasions may be determined based on an order of reference time points of first signals associated with the at least two monitoring occasions. For example, in C5 or C6, if W monitoring occasions in the plurality of monitoring occasions correspond to a same search space, and W is an integer greater than or equal to 2, the W monitoring occasions may be sorted in an earliest-to-latest order of reference time points of the monitoring occasions; the W monitoring occasions may be sorted in a latest-to-earliest order of reference time points of the monitoring occasions; the W monitoring occasions may be sorted in an earliest-to-latest order of reference time points of first signals associated with the monitoring occasions, or the W monitoring occasions may be sorted in a latest-to-earliest order of reference time points of first signals associated with the monitoring occasions.

For example, the plurality of monitoring occasions are sorted in ascending order of the indexes of the search spaces corresponding to the monitoring occasions. The plurality of monitoring occasions include an MO 1 to an MO 3. The MO 1 and the MO 2 correspond to a search space SS 1, and the MO 3 corresponds to a search space SS 2. An index of the SS 1 is smaller than an index of the SS 2. If the MO 1 and the MO 2 are sorted in an earliest-to-latest order of reference time points of the monitoring occasions, and the reference time point of the MO 1 is earlier than the reference time point of the MO 2, the order of the plurality of monitoring occasions may be the MO 1, the MO 2, and the MO 3. Alternatively, if the MO 1 and the MO 2 are sorted in a latest-to-earliest order of reference time points of the monitoring occasions, and the reference time point of the MO 1 is earlier than the reference time point of the MO 2, the order of the plurality of monitoring occasions may be the MO 2, the MO 1, and the MO 3. Alternatively, if the MO 1 and the MO 2 are sorted in an earliest-to-latest order of reference time points of first signals associated with the monitoring occasions, and the reference time point of the first signal associated with the MO 1 is earlier than the reference time point of the first signal associated with the MO 2, the order of the plurality of monitoring occasions may be the MO 1, the MO 2, and the MO 3. Alternatively, if the MO 1 and the MO 2 are sorted in a latest-to-earliest order of reference time points of first signals associated with the monitoring occasions, and the reference time point of the first signal associated with the MO 1 is earlier than the reference time point of the first signal associated with the MO 2, the order of the plurality of monitoring occasions may be the MO 2, the MO 1, and the MO 3.

For another example, the plurality of monitoring occasions are sorted in descending order of the indexes of the search spaces corresponding to the monitoring occasions. The plurality of monitoring occasions include an MO 1 to an MO 3. The MO 1 and the MO 2 correspond to a search space SS 1, and the MO 3 corresponds to a search space SS 2. An index of the SS 1 is smaller than an index of the SS 2. If the MO 1 and the MO 2 are sorted in an earliest-to-latest order of reference time points of the monitoring occasions, and the reference time point of the MO 1 is earlier than the reference time point of the MO 2, the order of the plurality of monitoring occasions may be the MO 3, the MO 1, and the MO 2. Alternatively, if the MO 1 and the MO 2 are sorted in a latest-to-earliest order of reference time points of the monitoring occasions, and the reference time point of the MO 1 is earlier than the reference time point of the MO 2, the order of the plurality of monitoring occasions may be the MO 3, the MO 2, and the MO 1. Alternatively, if the MO 1 and the MO 2 are sorted in an earliest-to-

latest order of reference time points of first signals associated with the monitoring occasions, and the reference time point of the first signal associated with the MO 1 is earlier than the reference time point of the first signal associated with the MO 2, the order of the plurality of monitoring occasions may be the MO 3, the MO 1, and the MO 2. Alternatively, if the MO 1 and the MO 2 are sorted in a latest-to-earliest order of reference time points of first signals associated with the monitoring occasions, and the reference time point of the first signal associated with the MO 1 is earlier than the reference time point of the first signal associated with the MO 2, the order of the plurality of monitoring occasions may be the MO 3, the MO 2, and the MO 1.

C7: T monitoring occasions in the plurality of monitoring occasions are ranked first, and T is a positive integer. The T monitoring occasions may be preset, for example, specified in a protocol. For example, the T monitoring occasions may include a monitoring occasion corresponding to a CSS.

Optionally, monitoring occasions other than the T monitoring occasions in the plurality of monitoring occasions may be sorted in any manner of C1 to C6. For example, the plurality of monitoring occasions include an MO 1 to an MO 4. If the MO 4 corresponds to a CSS, the MO 4 is ranked first in the plurality of monitoring occasions, and the MO 1 to the MO 3 may be sorted in any manner of C1 to C6.

For example, the monitoring occasions other than the T monitoring occasions in the plurality of monitoring occasions may include a monitoring occasion corresponding to a USS.

In the manner c3, the first apparatus can quickly and accurately determine the order of the plurality of monitoring occasions.

**Manner c4:** The order of the plurality of PDCCH resources is an order of the plurality of PDCCH candidates. In other words, the plurality of PDCCH resources are the plurality of PDCCH candidates. The order of the plurality of PDCCH candidates may be determined based on at least one of the following: an order of monitoring occasions corresponding to the plurality of PDCCH candidates, an order (or a ranking) of aggregation levels of the plurality of PDCCH candidates, an order of reference time points of first signals associated with the plurality of PDCCH candidates, or an order of indexes of the plurality of PDCCH candidates. For specific content and a determining manner of the order of the monitoring occasions, refer to the descriptions of the order of the monitoring occasions in the manner c3. For specific content of the reference time point of the first signal, refer to the descriptions of the reference time point of the first signal in the manner c1. Details are not described herein again.

Optionally, the order of the plurality of PDCCH candidates may satisfy at least one of the following D1 and D2: D1: The plurality of PDCCH candidates may be sorted in a first-to-last order of the monitoring occasions corresponding to the PDCCH candidates. For example, the plurality of PDCCH candidates include a PDCCH candidate 1 to a PDCCH candidate 3. The PDCCH candidate 1 to the PDCCH candidate 3 respectively correspond to a monitoring occasion MO 1 to a monitoring occasion MO 3. If an order of the MO 1 to the MO 3 is the MO 1, the MO 2, and the MO 3, the order of the plurality of PDCCH candidates may be the PDCCH candidate 1, the PDCCH candidate 2, and the PDCCH candidate 3.

In some possible manners, when the plurality of PDCCH candidates are sorted in the first-to-last order of the monitoring occasions corresponding to the PDCCH candidates, if X PDCCH candidates in the plurality of PDCCH candidates correspond to a same monitoring occasion, and X is an integer greater than or equal to 2, an order of the X PDCCH candidates may be determined based on an order of aggregation levels of the PDCCH candidates. For example, the X PDCCH candidates may be sorted in descending order of the aggregation levels of the PDCCH candidates; or the X PDCCH candidates may be sorted in ascending order of the aggregation levels of the PDCCH candidates.

For example, the plurality of PDCCH candidates include a PDCCH candidate 1 to a PDCCH candidate 3. The PDCCH candidate 1 and the PDCCH candidate 2 correspond to a monitoring occasion MO 1, and the PDCCH candidate 3 corresponds to a monitoring occasion MO 2. An order of the MO 1 and the MO 2 is the MO 1 and the MO 2. If the PDCCH candidate 1 and the PDCCH candidate 2 are sorted in descending order of aggregation levels of the PDCCH candidates, and the aggregation level of the PDCCH candidate 1 is higher than the aggregation level of the PDCCH candidate 2, the order of the plurality of PDCCH candidates may be the PDCCH candidate 1, the PDCCH candidate 2, and the PDCCH candidate 3. Alternatively, if the PDCCH candidate 1 and the PDCCH candidate 2 are sorted in ascending order of aggregation levels of the PDCCH candidates, and the aggregation level of the PDCCH candidate 1 is higher than the aggregation level of the PDCCH candidate 2, the order of the plurality of PDCCH candidates may be the PDCCH candidate 2, the PDCCH candidate 1, and the PDCCH candidate 3.

Optionally, if aggregation levels of Y PDCCH candidates in the X PDCCH candidates are the same, and Y is an integer greater than or equal to 2, the Y PDCCH candidates may be determined based on an order of indexes of the PDCCH candidates. For example, the Y PDCCH candidates may be sorted in ascending order of the indexes of the PDCCH candidates; or the Y PDCCH candidates may be sorted in descending order of the indexes of the PDCCH candidates.

For example, the Y PDCCH candidates include a PDCCH candidate 1 and a PDCCH candidate 2. An index of the PDCCH candidate 1 is smaller than an index of the PDCCH candidate 2. If the PDCCH candidate 1 and the PDCCH candidate 2 are sorted in ascending order of the indexes of the PDCCH candidates, an order of the Y PDCCH candidates is the PDCCH candidate 1 and the PDCCH candidate 2. Alternatively, if the PDCCH candidate 1 and the PDCCH candidate 2

are sorted in descending order of the indexes of the PDCCH candidates, an order of the Y PDCCH candidates is the PDCCH candidate 2 and the PDCCH candidate 1.

In some other possible manners, when the plurality of PDCCH candidates are sorted in the first-to-last order of the monitoring occasions corresponding to the PDCCH candidates, if X PDCCH candidates in the plurality of PDCCH candidates correspond to a same monitoring occasion, and X is an integer greater than or equal to 2, an order of the X PDCCH candidates may be determined based on an order of indexes of the PDCCH candidates. For example, the X PDCCH candidates may be sorted in ascending order of the indexes of the PDCCH candidates; or the X PDCCH candidates may be sorted in descending order of the indexes of the PDCCH candidates.

For example, the plurality of PDCCH candidates include a PDCCH candidate 1 to a PDCCH candidate 3. The PDCCH candidate 1 and the PDCCH candidate 2 correspond to a monitoring occasion MO 1, and the PDCCH candidate 3 corresponds to a monitoring occasion MO 2. An order of the MO 1 and the MO 2 is the MO 1 and the MO 2. An index of the PDCCH candidate 1 is smaller than an index of the PDCCH candidate 2. If the PDCCH candidate 1 and the PDCCH candidate 2 are sorted in ascending order of the indexes of the PDCCH candidates, the order of the plurality of PDCCH candidates is the PDCCH candidate 1, the PDCCH candidate 2, and the PDCCH candidate 3. Alternatively, if the PDCCH candidate 1 and the PDCCH candidate 2 are sorted in descending order of the indexes of the PDCCH candidates, the order of the plurality of PDCCH candidates is the PDCCH candidate 2, the PDCCH candidate 1, and the PDCCH candidate 3.

D2: The plurality of PDCCH candidates are sorted in an earliest-to-latest of the reference time points of the first signals associated with the PDCCH candidates. For example, the plurality of PDCCH candidates include a PDCCH candidate 1 to a PDCCH candidate 3. The PDCCH candidate 1 to the PDCCH candidate 3 respectively correspond to first signals CDS 1 to CDS 3. If an earliest-to-latest order of reference time points of the CDS 1 to the CDS 3 is the CDS 1, the CDS 2, and the CDS 3, the order of the plurality of PDCCH candidates may be the PDCCH candidate 1, the PDCCH candidate 2, and the PDCCH candidate 3.

Optionally, when the plurality of PDCCH candidates are sorted in the earliest-to-latest order of the reference time points of the first signals associated with the PDCCH candidates, if reference time points of first signals associated with Z PDCCH candidates in the plurality of PDCCH candidates are the same, and Z is an integer greater than or equal to 2, the Z PDCCH candidates may be sorted in a first-to-last order of monitoring occasions corresponding to the PDCCH candidates. In other words, the Z PDCCH candidates may be sorted in the manner in D1.

For example, the plurality of PDCCH candidates include a PDCCH candidate 1 to a PDCCH candidate 3. The PDCCH candidate 1 to the PDCCH candidate 3 respectively correspond to first signals CDS 1 to CDS 3. Reference time points of the CDS 1 and the CDS 2 are the same, and the reference time point of the CDS 1 is earlier than a reference time point of the CDS 3. If a monitoring occasion corresponding to the PDCCH candidate 1 is ranked before a monitoring occasion corresponding to the PDCCH candidate 2, the order of the plurality of PDCCH candidates may be the PDCCH candidate 1, the PDCCH candidate 2, and the PDCCH candidate 3.

In the manner c4, the first apparatus can quickly and accurately determine the order of the plurality of PDCCH candidates.

Optionally, the foregoing method is applicable to all PDCCH resources, or the foregoing method is applicable only to specified PDCCH resources. For example, in the foregoing method, the PDCCH resource includes only a control resource set corresponding to only a USS. In other words, the foregoing method is applicable only to the control resource set corresponding to only the USS. For another example, in the foregoing method, the PDCCH resource includes only a control resource set corresponding to a USS. In other words, the foregoing method is applicable only to the control resource set corresponding to the USS. For still another example, in the foregoing method, the PDCCH resource includes only a USS. In other words, the foregoing method is applicable only to the USS. For yet another example, in the foregoing method, the PDCCH resource includes only a cell-level search space. In other words, the foregoing method is applicable only to the cell-level search space. For yet another example, in the foregoing method, the PDCCH resource includes only a monitoring occasion corresponding to a USS. In other words, the foregoing method is applicable only to the monitoring occasion corresponding to the USS. For yet another example, in the foregoing method, the PDCCH resource includes only a monitoring occasion corresponding to a cell-level search space. In other words, the foregoing method is applicable only to the monitoring occasion corresponding to the cell-level search space. For yet another example, in the foregoing method, the PDCCH resource includes only a PDCCH candidate corresponding to a USS. In other words, the foregoing method is applicable only to the PDCCH candidate corresponding to the USS. For yet another example, in the foregoing method, the PDCCH resource includes only a PDCCH candidate corresponding to a cell-level search space. In other words, the foregoing method is applicable only to the PDCCH candidate corresponding to the cell-level search space.

Based on a same technical concept as the foregoing method embodiments, an embodiment of this application provides a corresponding communication apparatus, which may be configured to perform functions of related steps in the foregoing method embodiments. The function may be implemented by using hardware, may be implemented by using software, or may be implemented by hardware by executing corresponding software. The hardware or the software includes one or more modules corresponding to the function. The communication apparatus may be a terminal or a module (for example, a circuit or a chip (for example, a modem chip, or an SoC chip or a SIP chip including a modem core)) in the

terminal; or may be a logical node, a logical module, or software that can implement all or some functions of the terminal or an access network device. Alternatively, the communication apparatus may be an access network device or a module (for example, a circuit or a chip (for example, a modem chip, an SoC chip including a modem core, or an SIP chip)) in the access network device; or may be a logical node, a logical module, or software that can implement all or some functions of the access network device.

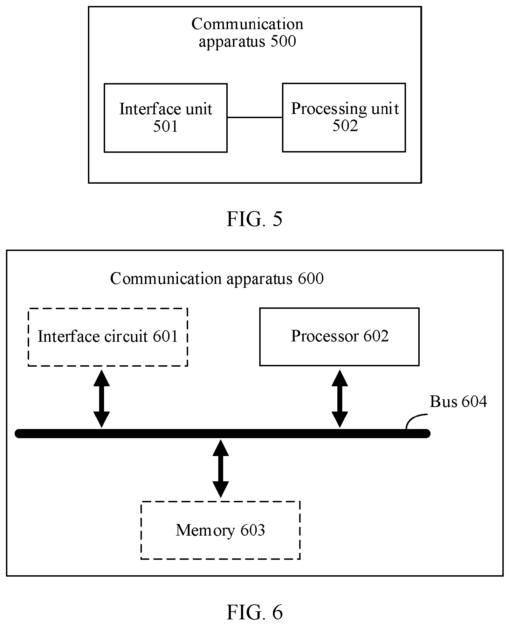

In a possible implementation, a structure of the communication apparatus provided in this embodiment of this application is shown in FIG. 5, and the communication apparatus includes a processing unit 502. Optionally, the communication apparatus further includes an interface unit 501. The following describes functions of the units in the communication apparatus 500.

The interface unit 501 is configured to input and/or output information. Inputting information may be replaced with receiving information, and outputting information may be replaced with sending information. When outputting the information, the interface unit 501 may output the information to an apparatus other than the communication apparatus 500, or may output the information to another unit in the communication apparatus 500. The interface unit 501 may be a transceiver unit, including a receiving unit and/or a sending unit, and may be configured to support the communication apparatus 500 in implementing the receiving operation and/or sending operation in the foregoing method embodiments. In some manners, the interface unit 501 may be implemented by using at least one of a physical interface, a communication module, a communication interface, and an input/output interface. In some other manners, the interface unit 501 may be implemented by using an interface circuit, for example, a mobile communication module. The mobile communication module may include one or more of at least one antenna, at least one filter, a switch, a power amplifier, a low noise amplifier (low noise amplifier, LNA), and the like.

The processing unit 502 may be configured to support the communication apparatus 500 in performing the processing action in the foregoing method embodiments. The processing unit 502 may be implemented by using one or more processors. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

In an implementation, the communication apparatus 500 is used in the first apparatus in embodiments of this application shown in FIG. 4. The following describes a specific function of the processing unit 502 in this implementation.

The processing unit 502 is configured to: receive a configuration message through the interface unit 501, where the configuration message includes information about a PDCCH resource, and the PDCCH resource includes a control resource set, a search space, a monitoring occasion, or a PDCCH candidate; and determine, depending on whether a first signal associated with the PDCCH resource is received, whether to receive a PDCCH corresponding to the PDCCH resource.

In some possible manners, the processing unit 502 is specifically configured to: if a first condition is satisfied, receive, through the interface unit 501, the PDCCH corresponding to the PDCCH resource, where the first condition includes one or a combination of more of the following: the first signal is received; a quantity of blind detections corresponding to the PDCCH resource is less than or equal to a quantity of remaining blind detections; or a quantity of non-overlapping control channel elements CCEs corresponding to the PDCCH resource is less than or equal to a quantity of remaining non-overlapping CCEs.

Optionally, the processing unit 502 is further configured to: if the first condition is satisfied, subtract the quantity of blind detections corresponding to the PDCCH resource from the quantity of remaining blind detections to obtain an updated quantity of remaining blind detections, and/or subtract the quantity of non-overlapping CCEs corresponding to the PDCCH resource from the quantity of remaining non-overlapping CCEs to obtain an updated quantity of remaining non-overlapping CCEs.

In some other possible manners, the processing unit 502 is specifically configured to: if a second condition is satisfied, skip receiving the PDCCH corresponding to the PDCCH resource, where the second condition includes one or a combination of more of the following: the first signal is not received; the first signal is received, and a quantity of blind detections corresponding to the PDCCH resource is greater than a quantity of remaining blind detections; or the first signal is received, and a quantity of non-overlapping CCEs corresponding to the PDCCH resource is greater than a quantity of remaining non-overlapping CCEs.

Optionally, the processing unit 502 is further configured to: if the second condition is satisfied, keep the quantity of remaining blind detections unchanged, and/or keep the quantity of remaining non-overlapping CCEs unchanged.

In some implementations, the configuration information includes information about a plurality of PDCCH resources, the plurality of PDCCH resources include a plurality of control resource sets, a plurality of search spaces, a plurality of monitoring occasions, or a plurality of PDCCH candidates, and the PDCCH resource is any PDCCH resource in the plurality of PDCCHs. The processing unit 502 is specifically configured to determine, based on an order of the plurality of PDCCH resources and depending on whether a first signal associated with each of the plurality of PDCCH

resources is received, whether to receive a PDCCH corresponding to each PDCCH resource.

In another implementation, the communication apparatus 500 is used in the second apparatus in embodiments of this application shown in FIG. 4. The following describes a specific function of the processing unit 502 in this implementation.

The processing unit 502 is configured to: send a configuration message through the interface unit 501, where the configuration message includes information about a PDCCH resource, and the PDCCH resource includes a control resource set, a search space, a monitoring occasion, or a PDCCH candidate; and determine, depending on whether a PDCCH corresponding to the PDCCH resource is sent, whether to send a first signal associated with the PDCCH resource.

In some possible manners, the processing unit 502 is specifically configured to: when the PDCCH corresponding to the PDCCH resource is sent, determine to send the first signal associated with the PDCCH resource; and/or when the PDCCH corresponding to the PDCCH resource is not sent, determine not to send the first signal associated with the PDCCH resource.

For more detailed descriptions of the processing unit 502 and the interface unit 501, refer to related descriptions in the method embodiments shown in FIG. 4. Details are not described herein.

It should be noted that, in the foregoing embodiment of this application, division into the modules is an example, is merely logical function division, and may be other division during actual implementation. In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for instructing a computer device (which may be a personal computer, a server, or a network device) or a processor (processor) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In a possible implementation, for a communication apparatus provided in an embodiment of this application, refer to FIG. 6. The communication apparatus 600 includes a processor 602. Optionally, the communication apparatus 600 further includes an interface circuit 601 and a memory 603. The interface circuit 601, the processor 602, and the memory 603 are coupled to each other.

Optionally, the interface circuit 601, the processor 602, and the memory 603 are coupled to each other through a bus 604. The bus 604 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one bold line represents the bus in FIG. 6, but this does not mean that there is only one bus or only one type of bus.

The interface circuit 601 is configured to input and/or output information. Inputting information may be replaced with receiving information, and outputting information may be replaced with sending information. When outputting the information, the interface circuit 601 may output the information to an apparatus other than the communication apparatus 600, or may output the information to another unit in the communication apparatus 600. For example, the interface circuit 601 may be implemented by using at least one of a physical interface, a communication module, a communication interface, an input/output interface, and a mobile communication module. The mobile communication module may include one or more of at least one antenna, at least one filter, a switch, a power amplifier, an LNA, and the like.

The processor 602 may be configured to support the communication apparatus 600 in performing the processing action in the foregoing method embodiments. When the communication apparatus 600 is configured to implement the foregoing method embodiments, the processor 602 may be further configured to implement a function of the foregoing processing unit 502. The processor 602 may be a CPU, or may be another general-purpose processor, a DSP, an ASIC, an FPGA or another programmable logic device, a transistor logic device, a hardware component, or any combination thereof. The general-purpose processor may be a microprocessor or any conventional processor. The processor 602 may include one or more processors.

In a possible design, when the communication apparatus 600 is a terminal or an access network device, the interface circuit 601 may be a transceiver, including a receiver and/or a transmitter, and may be configured to support the communication apparatus 600 in implementing the receiving operation and/or sending operation in the foregoing method embodiments. The processor 602 may include one or more of a modem chip, or an SoC chip or a SIP chip including a modem core, and may be configured to support the communication apparatus 600 in implementing the processing operation in the foregoing method embodiments.

In another possible design, when the communication apparatus 600 is a circuit or a chip in a terminal or an access network device, for example, a modem chip, or an SoC chip or a SIP chip including a modem core, the interface circuit 601 may be an interface circuit or a data transceiver circuit on the circuit or the chip, and may be configured to support the communication apparatus 600 in implementing the receiving operation and/or sending operation in the foregoing method embodiments. A function of the processor 602 may be implemented by using a circuit system that includes one or more processors or processor cores in the foregoing circuit or chip, and may be configured to support the communication apparatus 600 in implementing the processing operation in the foregoing method embodiments.

In an implementation, the communication apparatus 600 is used in the first apparatus in embodiments of this application shown in FIG. 4. The following describes a specific function of the processor 602 in this implementation.

The processor 602 is configured to: receive a configuration message through the interface circuit 601, where the configuration message includes information about a PDCCH resource, and the PDCCH resource includes a control resource set, a search space, a monitoring occasion, or a PDCCH candidate; and determine, depending on whether a first signal associated with the PDCCH resource is received, whether to receive a PDCCH corresponding to the PDCCH resource.

In another implementation, the communication apparatus 600 is used in the second apparatus in embodiments of this application shown in FIG. 4. The following describes a specific function of the processor 602 in this implementation.

The processor 602 is configured to: send a configuration message through the interface circuit 601, where the configuration message includes information about a PDCCH resource, and the PDCCH resource includes a control resource set, a search space, a monitoring occasion, or a PDCCH candidate; and determine, depending on whether a PDCCH corresponding to the PDCCH resource is sent, whether to send a first signal associated with the PDCCH resource.

For the specific function of the processor 602, refer to the descriptions in the communication method provided in the foregoing embodiments of this application and the instances, and the descriptions of the specific functions of the communication apparatus 500 in the embodiment of this application shown in FIG. 5. Details are not described herein again.

The memory 603 is configured to store program instructions, data, and/or the like. Specifically, the program instructions may include program code. The program code includes computer operation instructions. The memory 603 may include a RAM, or may further include a non-volatile memory (non-volatile memory), for example, at least one magnetic disk memory. The processor 602 executes the program instructions stored in the memory 603, and uses the data stored in the memory 603, to implement the foregoing function, so as to implement the communication method provided in the foregoing embodiments of this application. The memory 603 may be integrated with the processor 602, or may be a memory outside the communication apparatus.

It may be understood that the memory 603 in FIG. 6 in this application may be a volatile memory or a non-volatile memory, or may include a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. By way of example, and not limitation, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes but is not limited to these and any memory of another appropriate type.

Based on the foregoing embodiments, an embodiment of this application further provides a computer program product including computer-executable instructions. When the computer program product runs, the method provided in the foregoing embodiments is caused to be performed.

Based on the foregoing embodiments, an embodiment of this application further provides a computer-readable storage medium. The computer-readable storage medium stores a computer program. When the computer program is executed by a computer, the computer is caused to perform the method provided in the foregoing embodiments.

The storage medium may be any usable medium that can be accessed by a computer. The following provides an example but does not impose a limitation: The computer-readable medium may include a RAM, a ROM, an EEPROM, a CD-ROM or another optical disc storage, or a magnetic disk storage medium or another magnetic storage device, or any other medium that can carry or store expected program code in a form of instructions or a data structure and can be accessed by a computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions related to the devices in the foregoing embodiments. In a possible design, the chip system further includes a memory, and the memory is configured to store a program and data that are necessary for the computer apparatus. The chip system may include a chip, or may include a chip and another discrete device.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

The computer program instructions may alternatively be stored in a computer-readable memory that can guide the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto the computer or the another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

In this application, "at least one" or "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. "A combination of a plurality of items" may indicate performing a logical "AND" operation on the plurality of items, indicate performing a logical "OR" operation on the plurality of items, or indicate performing a combination of a logical "AND" operation and a logical "OR" operation on the plurality of items (for example, performing a logical "AND" operation on a first part of the plurality of items and performing a logical "OR" operation on a second part of the plurality of items). For example, a combination of A, B, and C may indicate that all of A, B, and C exist; may indicate that only A exists, only B exists, or only C exists; may indicate that both A and B exist, or only C exists; or may indicate that both A and B exist, or both A and C exist. In the text descriptions of this application, the character "/" usually indicates an "or" relationship between associated objects.

It may be understood that various numbers in embodiments of this application are merely used for differentiation for ease of description, and are not used to limit the scope of embodiments of this application. Sequence numbers of the foregoing processes do not mean an execution order, and the execution order of the processes should be determined based on functions and internal logic of the processes.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

**1.** A communication method, comprising:

receiving a configuration message, wherein the configuration message comprises information about a physical downlink control channel PDCCH resource, and the PDCCH resource comprises a control resource set CORESET, a search space, a monitoring occasion, or a PDCCH candidate; and

determining, depending on whether a first signal associated with the PDCCH resource is received, whether to receive a PDCCH corresponding to the PDCCH resource.

2. The method according to claim 1, wherein determining, depending on whether the first signal associated with the PDCCH resource is received, whether to receive the PDCCH corresponding to the PDCCH resource comprises: if a first condition is satisfied, receiving the PDCCH corresponding to the PDCCH resource, wherein the first condition comprises one or a combination of more of the following:

 the first signal is received;
 a quantity of blind detections corresponding to the PDCCH resource is less than or equal to a quantity of remaining blind detections; or
 a quantity of non-overlapping control channel elements CCEs corresponding to the PDCCH resource is less than or equal to a quantity of remaining non-overlapping CCEs.

3. The method according to claim 2, wherein the method further comprises: if the first condition is satisfied, subtracting the quantity of blind detections corresponding to the PDCCH resource from the quantity of remaining blind detections to obtain an updated quantity of remaining blind detections, and/or subtracting the quantity of non-overlapping CCEs corresponding to the PDCCH resource from the quantity of remaining non-overlapping CCEs to obtain an updated quantity of remaining non-overlapping CCEs.

4. The method according to claim 1, wherein determining, depending on whether the first signal associated with the PDCCH resource is received, whether to receive the PDCCH corresponding to the PDCCH resource comprises: if a second condition is satisfied, skipping receiving the PDCCH corresponding to the PDCCH resource, wherein the second condition comprises one or a combination of more of the following:

 the first signal is not received;
 the first signal is received, and a quantity of blind detections corresponding to the PDCCH resource is greater than a quantity of remaining blind detections; or
 the first signal is received, and a quantity of non-overlapping CCEs corresponding to the PDCCH resource is greater than a quantity of remaining non-overlapping CCEs.

5. The method according to claim 4, wherein if the second condition is satisfied, the quantity of remaining blind detections remains unchanged, and/or the quantity of remaining non-overlapping CCEs remains unchanged.

6. The method according to any one of claims 1 to 5, wherein the configuration information comprises information about a plurality of PDCCH resources, the plurality of PDCCH resources comprise a plurality of control resource sets, a plurality of search spaces, a plurality of monitoring occasions, or a plurality of PDCCH candidates, and the PDCCH resource is any PDCCH resource in the plurality of PDCCHs; and
determining, depending on whether the first signal associated with the PDCCH resource is received, whether to receive the PDCCH corresponding to the PDCCH resource comprises:
determining, based on an order of the plurality of PDCCH resources and depending on whether a first signal associated with each of the plurality of PDCCH resources is received, whether to receive a PDCCH corresponding to each PDCCH resource.

7. The method according to claim 6, wherein each of the plurality of PDCCH resources is associated with one first signal, and the first signal is used to determine whether a PDCCH corresponding to the PDCCH resource associated with the first signal is sent.

8. The method according to claim 6 or 7, wherein for a 1st PDCCH resource in the plurality of PDCCH resources, the quantity of remaining blind detections is a maximum quantity of blind detections specified in a protocol, and/or the quantity of remaining non-overlapping CCEs is a maximum quantity of non-overlapping CCEs specified in the protocol.

9. The method according to any one of claims 6 to 8, wherein the plurality of PDCCH resources are the plurality of control resource sets, the order of the plurality of PDCCH resources is an order of the plurality of control resource sets, and the order of the plurality of control resource sets is determined based on at least one of the following: an order of indexes of the plurality of control resource sets, an order of reference time points of search spaces corresponding to the plurality of control resource sets, an order of reference time points of first signals associated with the plurality of control resource sets, or a preset order.

10. The method according to claim 9, wherein the order of the plurality of control resource sets satisfies at least one of the

following:

the plurality of control resource sets are sorted in ascending order of the indexes of the control resource sets;
the plurality of control resource sets are sorted in descending order of the indexes of the control resource sets;
the plurality of control resource sets are sorted in an earliest-to-latest order of the reference time points of the search spaces corresponding to the control resource sets;
the plurality of control resource sets are sorted in an earliest-to-latest order of the reference time points of the first signals associated with the control resource sets; or
M control resource sets in the plurality of control resource sets are ranked first, M is a positive integer, and the M control resource sets are preset.

**11.** The method according to claim 10, wherein when the plurality of control resource sets are sorted in the earliest-to-latest order of the reference time points of the search spaces corresponding to the control resource sets, if reference time points of search spaces corresponding to N control resource sets in the plurality of control resource sets are the same, and N is an integer greater than or equal to 2, the N control resource sets are sorted in ascending order of indexes of the control resource sets; or the N control resource sets are sorted in descending order of indexes of the control resource sets; or
when the plurality of control resource sets are sorted in the earliest-to-latest order of the reference time points of the first signals associated with the control resource sets, if reference time points of first signals associated with P control resource sets in the plurality of control resource sets are the same, and P is an integer greater than or equal to 2, the P control resource sets are sorted in ascending order of indexes of the control resource sets; or the P control resource sets are sorted in descending order of indexes of the control resource sets.

**12.** The method according to any one of claims 6 to 8, wherein the plurality of PDCCH resources are the plurality of search spaces, the order of the plurality of PDCCH resources is an order of the plurality of search spaces, and the order of the plurality of search spaces is determined based on at least one of the following: an order of indexes of the plurality of search spaces, an order of reference time points of the plurality of search spaces, an order of reference time points of first signals associated with the plurality of search spaces, an order of indexes of control resource sets corresponding to the plurality of search spaces, or a preset order.

**13.** The method according to claim 12, wherein the order of the plurality of search spaces satisfies at least one of the following:

the plurality of search spaces are sorted in ascending order of the indexes of the search spaces;
the plurality of search spaces are sorted in descending order of the indexes of the search spaces;
the plurality of search spaces are sorted in an earliest-to-latest order of the reference time points of the search spaces;
the plurality of search spaces are sorted in an earliest-to-latest order of the reference time points of the first signals associated with the search spaces; or
Q search spaces in the plurality of search spaces are ranked first, Q is a positive integer, and the Q search spaces are preset.

**14.** The method according to claim 13, wherein when the plurality of search spaces are sorted in the earliest-to-latest order of the reference time points of the search spaces, if reference time points of R search spaces in the plurality of search spaces are the same, and R is an integer greater than or equal to 2, the R search spaces are sorted in ascending order of indexes of the search spaces; the R search spaces are sorted in descending order of indexes of the search spaces; the R search spaces are sorted in ascending order of indexes of control resource sets corresponding to the search spaces; or the R search spaces are sorted in descending order of indexes of control resource sets corresponding to the search spaces; or
when the plurality of search spaces are sorted in the earliest-to-latest order of the reference time points of the first signals associated with the search spaces, if reference time points of first signals associated with S search spaces in the plurality of search spaces are the same, and S is an integer greater than or equal to 2, the S search spaces are sorted in ascending order of indexes of the search spaces; the S search spaces are sorted in descending order of indexes of the search spaces; the S search spaces are sorted in ascending order of indexes of control resource sets corresponding to the search spaces; or the S search spaces are sorted in descending order of indexes of control resource sets corresponding to the search spaces.

**15.** The method according to any one of claims 6 to 8, wherein the plurality of PDCCH resources are the plurality of

monitoring occasions, the order of the plurality of PDCCH resources is an order of the plurality of monitoring occasions, and the order of the plurality of monitoring occasions is determined based on at least one of the following: an order of reference time points of the plurality of monitoring occasions, an order of reference time points of first signals associated with the plurality of monitoring occasions, an order of indexes of control resource sets corresponding to the plurality of monitoring occasions, an order of indexes of search sets corresponding to the plurality of monitoring occasions, or a preset order.

**16.** The method according to claim 15, wherein the order of the plurality of monitoring occasions satisfies at least one of the following:

the plurality of monitoring occasions are sorted in an earliest-to-latest order of the reference time points of the monitoring occasions;
the plurality of monitoring occasions are sorted in an earliest-to-latest order of the reference time points of the first signals associated with the monitoring occasions;
the plurality of monitoring occasions are sorted in ascending order of the indexes of the search spaces corresponding to the monitoring occasions;
the plurality of monitoring occasions are sorted in descending order of the indexes of the search spaces corresponding to the monitoring occasions; or
T monitoring occasions in the plurality of monitoring occasions are ranked first, T is a positive integer, and the T monitoring occasions are preset.

**17.** The method according to claim 16, wherein when the plurality of monitoring occasions are sorted in the earliest-to-latest order of the reference time points of the monitoring occasions, if reference time points of U monitoring occasions in the plurality of monitoring occasions are the same, and U is an integer greater than or equal to 2, the U monitoring occasions are sorted in ascending order of indexes of search spaces corresponding to the monitoring occasions; the U monitoring occasions are sorted in descending order of indexes of search spaces corresponding to the monitoring occasions; the U monitoring occasions are sorted in ascending order of indexes of control resource sets corresponding to the monitoring occasions; or the U monitoring occasions are sorted in descending order of indexes of control resource sets corresponding to the monitoring occasions;

when the plurality of monitoring occasions are sorted in the earliest-to-latest order of the reference time points of the first signals associated with the monitoring occasions, if reference time points of first signals associated with V monitoring occasions in the plurality of monitoring occasions are the same, and V is an integer greater than or equal to 2, the V monitoring occasions are sorted in ascending order of indexes of search spaces corresponding to the monitoring occasions; the V monitoring occasions are sorted in descending order of indexes of search spaces corresponding to the monitoring occasions; the V monitoring occasions are sorted in ascending order of indexes of control resource sets corresponding to the monitoring occasions; or the V monitoring occasions are sorted in descending order of indexes of control resource sets corresponding to the monitoring occasions; or
when the plurality of monitoring occasions are sorted in ascending order of the indexes of the search spaces corresponding to the monitoring occasions, or when the plurality of monitoring occasions are sorted in descending order of the indexes of the search spaces corresponding to the monitoring occasions, if W monitoring occasions in the plurality of monitoring occasions correspond to a same search space, and W is an integer greater than or equal to 2, the W monitoring occasions are sorted in an earliest-to-latest order of reference time points of the monitoring occasions; or the W monitoring occasions are sorted in an earliest-to-latest order of reference time points of first signals associated with the monitoring occasions.

**18.** The method according to any one of claims 6 to 8, wherein the plurality of PDCCH resources are the plurality of PDCCH candidates, the order of the plurality of PDCCH resources is an order of the plurality of PDCCH candidates, and the order of the plurality of PDCCH candidates is determined based on at least one of the following: an order of monitoring occasions corresponding to the plurality of PDCCH candidates, an order of aggregation levels of the plurality of PDCCH candidates, an order of reference time points of first signals associated with the plurality of PDCCH candidates, or an order of indexes of the plurality of PDCCH candidates.

**19.** The method according to claim 18, wherein the order of the plurality of PDCCH candidates satisfies at least one of the following:

the plurality of PDCCH candidates are sorted in a first-to-last order of the monitoring occasions corresponding to the PDCCH candidates; or

the plurality of PDCCH candidates are sorted in an earliest-to-latest order of the reference time points of the first signals associated with the PDCCH candidates.

**20.** The method according to claim 19, wherein when the plurality of PDCCH candidates are sorted in the first-to-last order of the monitoring occasions corresponding to the PDCCH candidates, if X PDCCH candidates in the plurality of PDCCH candidates correspond to a same monitoring occasion, and X is an integer greater than or equal to 2, the X PDCCH candidates are sorted in descending order of aggregation levels of the PDCCH candidates; or the X PDCCH candidates are sorted in ascending order of aggregation levels of PDCCH candidates; or
when the plurality of PDCCH candidates are sorted in the earliest-to-latest order of the reference time points of the first signals associated with the PDCCH candidates, if reference time points of first signals associated with Z PDCCH candidates in the plurality of PDCCH candidates are the same, and Z is an integer greater than or equal to 2, the Z PDCCH candidates are sorted in a first-to-last order of monitoring occasions corresponding to the PDCCH candidates.

**21.** The method according to claim 20, wherein if aggregation levels of Y PDCCH candidates in the X PDCCH candidates are the same, and Y is an integer greater than or equal to 2,

the Y PDCCH candidates are sorted in ascending order of indexes of the PDCCH candidates; or
the Y PDCCH candidates are sorted in descending order of indexes of the PDCCH candidates.

**22.** A communication apparatus, comprising a unit configured to perform the method according to any one of claims 1 to 21.

**23.** A communication apparatus, comprising a processor, wherein the processor is configured to execute a computer program or instructions, to cause the apparatus to perform the method according to any one of claims 1 to 21.

**24.** A computer-readable storage medium, wherein the computer-readable storage medium stores a computer program or instructions, and when the computer program or the instructions are executed, the method according to any one of claims 1 to 21 is implemented.

**25.** A computer program product, wherein the computer program product comprises computer program code, and when the computer program code is run, the method according to any one of claims 1 to 21 is implemented.

100
10
120i
110a
120j
110b
120a
120c
120d
200
Core network
120f
120g
120h
120b
120e
300
Internet

FIG. 1

110
Access network device
201
Processor
202
Memory
Computer program code
203
Transceiver
Transmitter
2031
2032
Receiver
2033
1033
120
Terminal
101
Processor
102
Memory
Computer program code
103
Transceiver
Transmitter
1031
1032
Receiver

FIG. 2

SS 1
SS 2
SS 3
SS 4
PDCCH candidate

FIG. 3

First apparatus
Second apparatus
S401: Configuration message
S403: Determine, depending on whether the first signal associated with the PDCCH resource is received, whether to receive the PDCCH corresponding to the PDCCH resource
S402: Determine, depending on whether a PDCCH corresponding to a PDCCH resource is sent, whether to send a first signal associated with the PDCCH resource
S404: If a first condition is satisfied, subtract a quantity of blind detections corresponding to the PDCCH resource from a quantity of remaining blind detections, and/or subtract a quantity of non-overlapping CCEs corresponding to the PDCCH resource from a quantity of remaining non-overlapping CCEs
S405: If a second condition is satisfied, keep the quantity of remaining blind detections unchanged, and/or keep the quantity of remaining non-overlapping CCEs unchanged

FIG. 4

Communication apparatus 500
Interface unit 501
Processing unit 502

FIG. 5

Communication apparatus 600
Interface circuit 601
Processor 602
Bus 604
Memory 603

FIG. 6

## INTERNATIONAL SEARCH REPORT

International application No. **PCT/CN2024/140422**

**A. CLASSIFICATION OF SUBJECT MATTER**

H04W72/044(2023.01)i

According to International Patent Classification (IPC) or to both national classification and IPC

**B. FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CJFD, CNTXT, DWPI, ENTXT, ENTXTC, VEN, WPABS, WPABSC, 3GPP: 物理下行控制信道, PDCCH, 配置, 接收, 检测, 控制资源集, CORESET, 搜索空间, 侦听, 非重叠, 无重叠, 控制信道单元, CCE, 数, 盲检, 盲检测, 次数, 剩余, receiv+, detect+, search space, listen+, non overlap, blind detection, times, remaining

**C. DOCUMENTS CONSIDERED TO BE RELEVANT**

| Category* | Citation of document, with indication, where appropriate, of the relevant passages | Relevant to claim No. |
|---|---|---|
| X | CN 114731580 A (HUAWEI TECHNOLOGIES CO., LTD.) 08 July 2022 (2022-07-08) description, paragraphs [0105]-[0180] | 1, 6-11, 15-25 |
| Y | CN 114731580 A (HUAWEI TECHNOLOGIES CO., LTD.) 08 July 2022 (2022-07-08) description, paragraphs [0105]-[0180] | 2-5, 12-14 |
| Y | CN 111385892 A (HUAWEI TECHNOLOGIES CO., LTD.) 07 July 2020 (2020-07-07) description, paragraphs [0079]-[0098] | 2-5, 12-14 |
| A | CN 111756512 A (HUAWEI TECHNOLOGIES CO., LTD.) 09 October 2020 (2020-10-09) entire document | 1-25 |
| A | CN 113316166 A (BEIJING SAMSUNG TELECOMMUNICATIONS RESEARCH AND DEVELOPMENT CENTER CO., LTD. et al.) 27 August 2021 (2021-08-27) entire document | 1-25 |

☐ Further documents are listed in the continuation of Box C.

☑ See patent family annex.

* Special categories of cited documents:

- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **18 March 2025** | **20 March 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**
**Information on patent family members**

International application No.
**PCT/CN2024/140422**

| Patent document cited in search report | Publication date (day/month/year) | Patent family member(s) | Publication date (day/month/year) |
|---|---|---|---|
| CN 114731580 A | 08 July 2022 | None | |
| CN 111385892 A | 07 July 2020 | WO 2020135444 A1 | 02 July 2020 |
| CN 111756512 A | 09 October 2020 | None | |
| CN 113316166 A | 27 August 2021 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202410067593